# EUROPEAN PATENT APPLICATION

(11) **EP 2 023 518 A1**
(43) Date of publication of application: **11.02.2009**
(21) Application number: 07743863.8
(22) Date of filing: 22.05.2007
(51) Int. Cl.: H04J 11/00, H04B 1/707

(54) **RECEIVER AND RECEIVING METHOD**

(30) Priority: 22.05.2006 JP 2006141505; 14.02.2007 JP 2007033489
(71) Applicant: Sharp Kabushiki Kaisha, Osaka-shi, Osaka 545-8522 (JP)
(72) Inventor: IMAMURA, Kimihiko, Y104 Vancouver, WA 98684 (US); SHIMEZAWA, Kazuyuki, Chiba-ken (JP); YAMADA, Ryota, Chiba-shi Chiba-ken (JP); YOSHIMOTO, Takashi, Chiba-shi Chiba-ken (JP)
(74) Representative: Müller - Hoffmann & Partner
(86) International application number: PCT/JP2007/060429
(87) International publication number: WO 2007/136056

(57) **Abstract**

An rf signal receiver of the present invention includes: a replica signal generating unit for generating on the basis of a received signal a replica of a transmission signal; a delayed arriving signal removing unit for removing the delayed arriving signal from the received signal through the use of the replica signal at the timing of a predetermined timing pattern; a signal combining unit for combining the output of the delayed arriving signal removing unit, whose output represents the results of the removal of the delayed arriving signal from the received signal at the timing of a predetermined timing pattern; and a demodulation unit for demodulating the output of the signal combining unit.

## Description

### TECHNICAL FIELD

The present invention relates to a radio frequency (rf) signal receiver and receiving method and particularly to a receiver and a receiving method for receiving rf signals through a multicarrier transmission system.

Priority is claimed on Japanese Patent Application No. 2006-141505 (filed May 22, 2006) and 2007-033489 (filed February 14, 2007), the content of which is incorporated herein by reference.

### BACKGROUND ART

In a multicarrier transmission system, the presence of a delay exceeding the guard interval (GI) causes inter symbol interferences (ISI) and/or inter carrier interferences (ICI), with the ISI being caused by the trailing delayed components of an immediately preceding symbol coming to be fast-Fourier-transform (FFT)-processed together with a current symbol and with the ICI being caused by the symbol-to-symbol gap (i.e., period of signal discontinuation) coming into the period on which the FFT processing is performed.

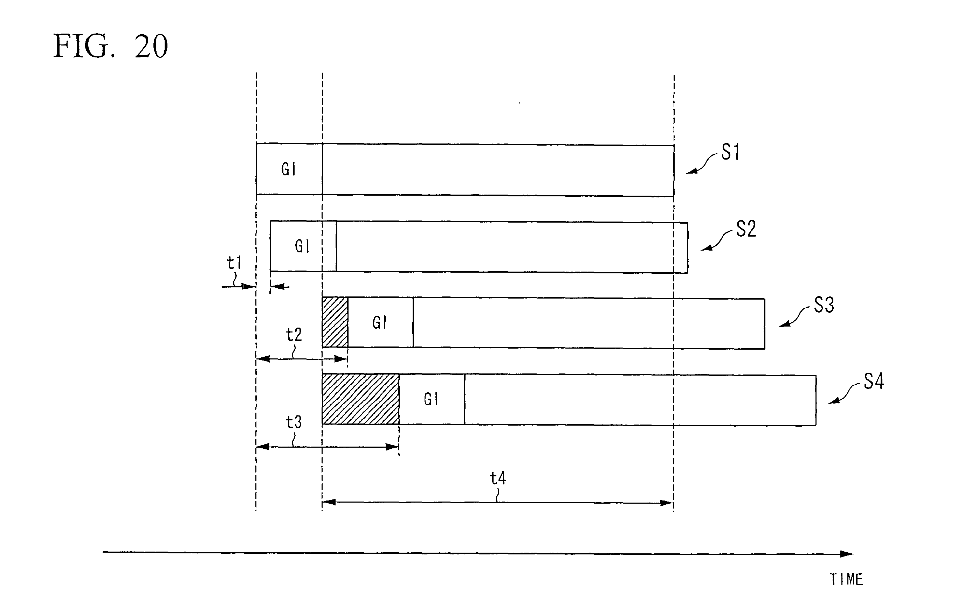

Fig. 20 shows signals arriving at rf signal receiver from a rf signal transmitter through a multipath environment. In the drawing, the lapse of time is shown along the horizontal axis. Symbols s1 to s4 denote signals arriving at the rf signal receiver from an rf transmitter through a multipath environment, i.e., through four propagation channels. At the front end of each of the symbols, a guard interval GI is inserted, which is actually a copy of the trailing portion of the respective symbol.

Relative to symbol s1, the first symbol from above in Fig. 20, which has been received first (or initially) from the transmitter, symbol s2, the second symbol from above in Fig. 20, is the signal received with delay t1, which is smaller than guard interval GI. Similarly, symbols s3 and s4, the third and the fourth symbols from above in Fig. 20, are the signals received with delay t2 and t3, respectively, which exceed GI. The first (or initially) received symbol s1 and the succeeding symbols s2 to s4 with delays t1 to t3, respectively, are collectively referred to as arriving signals.

The hatched portions preceding the third and the fourth symbols s3 and s4, show the interval in which the delayed (undesired) components of the preceding symbol come to be FFT-processed with the current (desired) symbol, while the interval t4 denotes an interval during which the FFT processing of the desired symbol is performed, with the hatched portions constituting the ISI components. The ISI components, which result from the interferences described above, cause deterioration in the quality of demodulated signal. In addition, since the third and fourth signals s3 and s4 involve the signal gap during the interval t4 for the FFT processing, the above-described ICI is caused.

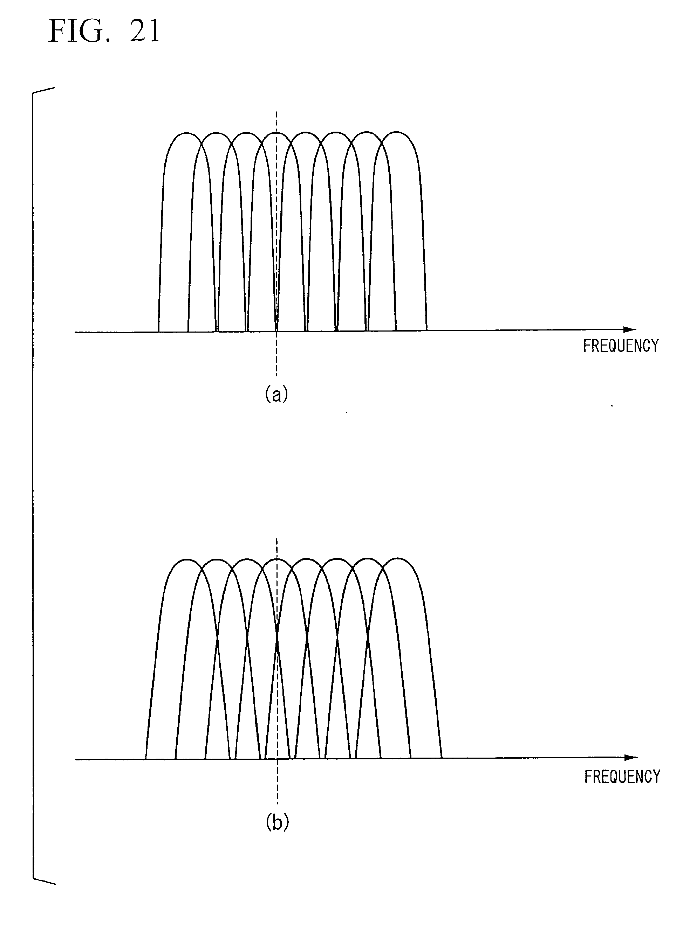

In Fig. 21, (a) and (b) illustrate, with respect to the multicarrier signal transmission/reception operation, the subcarriers being kept in orthogonal relationship (a) and being out of orthogonal relationship (b) due to the ICI affecting the subcarriers. More definitely, Fig. 21(a) shows the subcarriers free of the ICI, while Fig. 21(b) shows the subcarriers affected by the ICI.

More specifically, when there are no delayed symbols with a delay exceeding the GI, the signal component at the frequency shown by a dotted line in Fig. 21(a) is limited to one subcarrier frequency component, with no other subcarrier frequency components included. This condition, in which the subcarriers are in an orthogonal relationship, is needed for demodulation to be performed in an ordinary multicarrier transmission/reception.

In contrast, when there are delayed symbols with a delay exceeding the GI, the signal components at the frequency shown by a dotted line in Fig. 21(b) include, in addition to the desired subcarrier frequency component, those components at other adjacent subcarrier frequencies, causing the ICI. This condition, under which the subcarriers are not in an orthogonal relationship, results in the ICI, deteriorating the receiver characteristics.

A technique of avoiding the ISI- and ICI-induced deterioration of performance of a receiver for a multicarrier transmission/reception system, in which there are signal components with a delay exceeding the GI, is proposed in Patent Document 1. The prior-art system is adapted to perform the first-round demodulation to utilize the error-corrected demodulation output (MAP demodulator output) and thereby to generate undesired subcarrier replica signals containing the ISI and the ICI components, so that the reception signal free of the ISI and the ICI components may be generated for the second-round demodulation to achieve the improved quality of reception.

On the other hand, the combination of the multicarrier transmission/reception system with the CDM (code division multiplexing) technique has led to the proposals of MC-CDM (multicarrier-code division multiplexing) system, MC-CDMA (multicarrier-code division multiple access) system, and spread-OFCDM (orthogonal frequency and code division multiplexing) system.

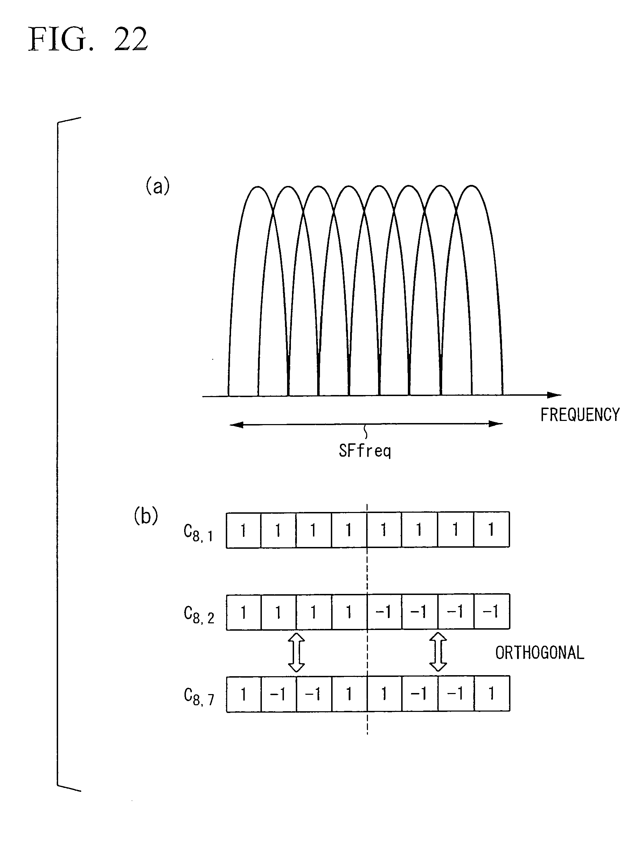

In Fig. 22, (a) and (b) illustrate the relationship between the orthogonal subcarriers and the orthogonal codes corresponding thereto. In Fig. 22, the horizontal axis shows frequency. Fig. 22(a) shows an MC-CDM transmission/reception system employing eight (8) subcarriers, for example. On the other hand, Fig. 22(b) shows three orthogonal codes C_{8,1}, C_{8,2}, and C_{8,7} corresponding to the eight subcarriers. As shown, C_{8,1} = (1, 1, 1, 1, 1, 1, 1, 1); C_{8,2} = (1, 1, 1, 1, -1, -1, -1, -1); and C_{8,7} = (1, -1, -1, 1, 1, -1, -1, 1). By multiplying data by three different kinds of orthogonal codes, three different data sequences can be transmitted in a multiplexed fashion through common timing and common frequency, which is one of the features of the MC-CDM system.

It is noted here that each of the three orthogonal codes C_{8,1}, C_{8,2} and C_{8,7} is an orthogonal code of an eight-bit repetition period, which makes the data demultiplexing possible among the orthogonal codes by the period-by-period data addition. In Fig. 22(a), SF_{freq} denotes the repetition period of the orthogonal code.

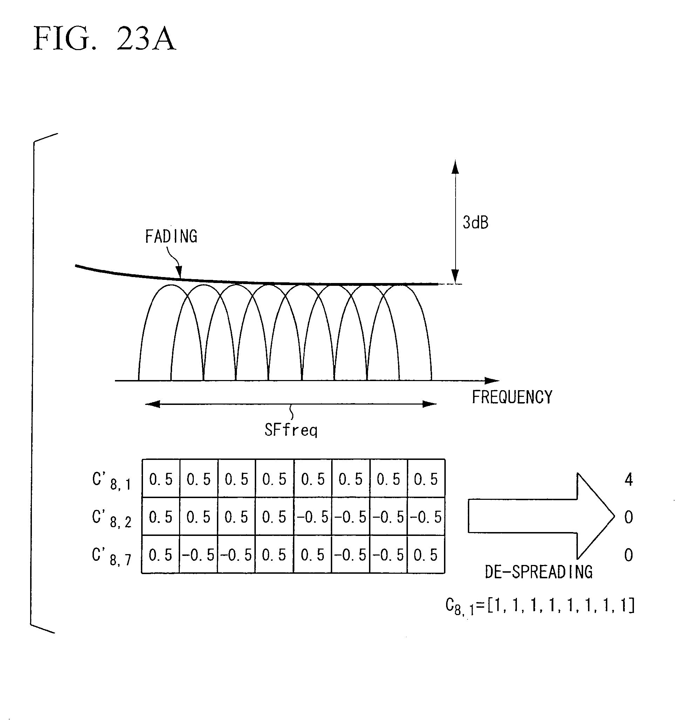

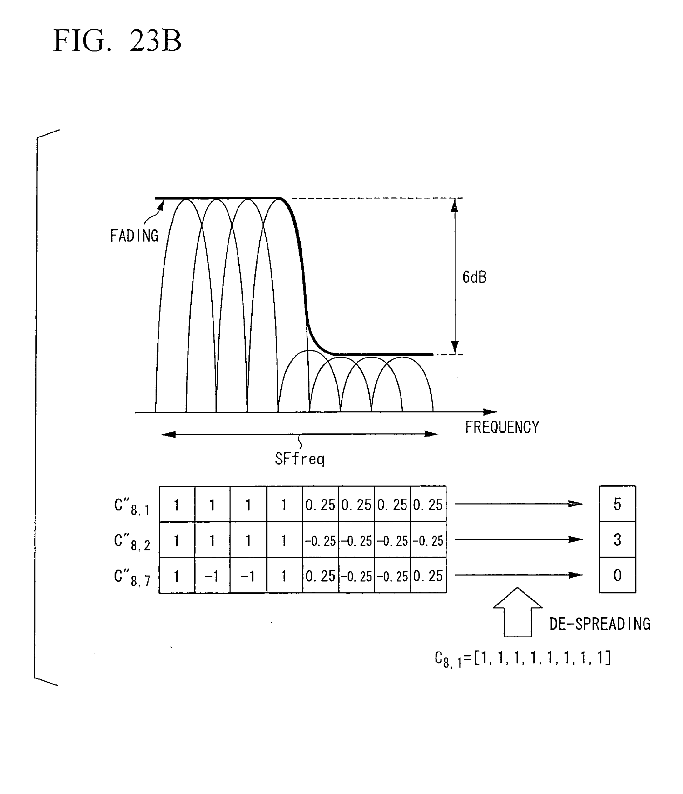

Figs.23A and 23B show, respectively, codes C'_{8,1}, C'_{8,2}, and C'_{8,7} as transmitted on the transmit side, and codes C"_{8,1}, C"_{8,2} and C"_{8,7} received through the MC-CDMA channels. It is to be noted here that Fig. 23A shows that there is no frequency variation during the repetition period of the orthogonal codes. It is assumed here that the despreading is performed at the timing of code C_{8,1}. In other words, a scalar product with code C_{8,1} is calculated, so that the addition of all the code values within SF_{freq} results in the code C'_{8,1} equal 4; and both code C'_{8,2} and code C'_{8,7} equal zero. This state is referred to as a state of the maintained inter-code orthogonality.

In contrast, if there is frequency fluctuation within the repetition period of the orthogonal code as shown in Fig. 23B, the despreading by code C_{8,1} leads to C"_{8,1} being equal 5, C"_{8,2} being equal 3 and C"_{8,7} being equal zero. In other words, interference components exist between codes C"_{8,1} and C"_{8,2}, putting the codes out of orthogonality. As described above, if the frequency fluctuation in the propagation channels occurs at a high rate (the frequency variation occurs at a high rate), the multicode interference in the MC-CDMA system adversely affects the performance of the receiver.

An approach to improve the deteriorated receiver performance caused by the collapsed code-to-code orthogonality is described in Patent Document 2 and Non-Patent Document 1. In the prior-art approach disclosed in these Documents, the signal components other than the desired codes are cancelled by the use of the error-corrected or despread data to eliminate intercode interference caused by code-multiplexing in the MC-CDMA transmission, and therefore the improvement in the quality of the reception signal is achieved.
Patent Document 1: Japanese Unexamined Patent Application, First Publication No. 2004-221702
Patent Document 2: Japanese Unexamined Patent Application, First Publication No. 2005-198223
Non-Patent Document 1: "Downlink Transmission of Broadband OFCDM Systems-Part I: Hybrid Detection," Zhou, Y; Wang, J.; Sawahashi, M., Pages: 718-729, IEEE Transactions on Communications (Vol.53, Issue 4)

### DISCLOSURE OF INVENTION

### Problem to be Solved by the Invention

However, the prior-art technique described above involves the problem of the increased amount of calculation required for the demodulation of multicarrier signals having a number of subcarriers and of the MC-CDM signals. Also, it involves the problem of the amount of calculation increasing by a factor of code division multiplexing in eliminating the inter-code interference in the MC-CDM multiplexing.

With a view to obviate the above-outlined problems, an object of the present invention is to provide an rf signal receiver and receiving method capable of reducing the amount of calculations required for demodulating signals received from an rf signal transmitter.

### Means for Solving the Problem

(1) According to one aspect of the present invention, there is provided an rf signal receiver comprising: a replica signal generating unit for generating on the basis of a received signal a replica of a transmitted signal; a delayed arriving signal removing unit for removing the delayed signal from the received signal through the use of the replica signal at the timing of a predetermined timing pattern; a signal combining unit for combining the output of the delayed arriving signal removing unit, whose output represents the results of the removal of the delayed arriving signal from the received signal at the timing of a predetermined timing pattern; and a demodulator unit for demodulating the output of the signal combining unit.
   The rf signal receiver of the present invention is adapted: to remove, at the delayed arriving signal removing unit, the delayed arriving signal at the timing of a predetermined timing pattern through the use of the replica signal generated at the replica signal generating unit; to combine at the signal combining unit the signals with the delayed signal removed at the timing of a predetermined timing pattern; and to demodulate the combined signal. This structure makes it possible to apply the FFT processing to the signals with the delayed signals removed. Also, the removal of the delayed arriving signals makes it possible to apply the despreading to the signals with the frequency selectivity lowered and, thereby to eliminate the intercode interference with the amount of calculation unaffected by the number of codes.
(2) According to another aspect of the present invention, there is provided an rf signal receiver, wherein the delayed arriving signal removing unit comprises a delayed signal replica generating unit for generating replicas of the delayed arriving signals at the timing of a predetermined timing pattern, and a signal subtracting unit for subtracting from the received signal the replica of the delayed arriving signal, said replica being generated at the delayed signal replica generating unit at the timing of a predetermined timing pattern.
   The rf signal receiver is adapted to generate at the delayed signal replica generating unit the replicas of the delayed signals at the timing of a predetermined timing pattern, and to subtract the delayed signal replica from the received signal, to thereby combine the delayed signal replicas with the received signal, so that the energy contained in the received signal is fully utilized with a minimum of energy loss.
(3) According to still another aspect of the invention, there is provided an rf signal receiver, wherein the delayed signal replica generating unit is adapted to set the predetermined timing patterns on the basis of the number of arriving rf signals as recognized.
   The present rf signal receiver is therefore capable of generating the replicas of the delayed signals depending on the number of the arriving signals.
(4) According to still another aspect of the present invention, there is provided an rf signal receiver, wherein the delayed signal replica generating unit is adapted to set the predetermined timing pattern on the basis of the timing of the recognized arriving signals.
   The present rf signal receiver is capable of generating the replicas of the delayed arriving signals, depending on the timing of the arriving signal.
(5) According to another aspect of the present invention, there is provided an rf signal receiver, wherein the delayed signal replica generating unit is adapted to set the predetermined timing pattern on the basis of the signal power level of the recognized arriving signal.
   The rf signal receiver of the present invention is capable of generating replicas of the delayed arriving signals depending on the signal power level of the arriving signal.
(6) According to still another aspect of the present invention, there is provided an rf signal receiver, wherein a signal decision unit is further provided for error-correcting the demodulation output from the demodulator unit on the basis of the demodulation results, thereby to decide on the signal on a bit-by-bit basis, and wherein the replica generating unit generates a replica signal, which is a replica of the transmitted signal, depending on the output from the signal decision unit.
   The rf signal receiver is capable of generating the replica signals on the basis of the result of the signal decision.
(7) According to still another aspect of the invention, there is provided an rf signal receiver, wherein the signal decision unit is adapted to perform error-correction demodulation based on the demodulation output supplied from the demodulator unit, to thereby provide as a decision output the bit-by-bit logarithmic likelihood ratio.
   The rf signal receiver of the invention is capable of generating replica signals based on the logarithmic likelihood ratio.
(8) According to still another aspect of the invention, there is provided an rf signal receiver further comprising propagation channel and noise power estimation unit for estimating the noise power level of the propagation channel, wherein the signal combining unit consists of an MMSE filter adapted to determine MMSE filter coefficients on the basis of the estimated channel impulse response and the estimated noise power.
   The rf signal receiver of the present invention is capable of deciding the MMSE filter coefficients on the basis of the estimated channel impulse response and the estimated noise power.
(9) According to still another aspect of the present invention, there is provided an rf signal receiver, wherein the signal combining unit uses the MMSE filter coefficients Wₘ expressed by equation (A) or (B), or MMSE filter coefficients W'_{i,m} expressed by equation (C) (where, m stands for a natural number; Ĥₘ stands for a transfer function for the m-th propagation channel Ĥ^{H}ₘ stands for the Hamiltonian for Ĥₘ; Cₘᵤₓ stands for a number of code multiplexing; σ̂²N stands for an estimated noise power; i stands for a natural number smaller than the number of delayed arriving signal removal units; Ĥ_{i,m} stands for a transfer function for the m-th propagation channel observed in the i-th delayed arriving signal removing unit; and ĤH_{i,m} stands for the Hamiltonian of Ĥ_{i,m}): ${W}_{m} = \frac{{\hat{H}}_{m}^{H}}{{\hat{H}}_{m}^{H} ⁢ {\hat{H}}_{m} + \left({C}_{mux}-1\right) ⁢ {\hat{H}}_{m}^{H} ⁢ {\hat{H}}_{m} + {\hat{σ}}_{N}^{2}} = \frac{{\hat{H}}_{m}^{H}}{{C}_{mux} ⁢ {\hat{H}}_{m}^{H} ⁢ {\hat{H}}_{m} + {\hat{σ}}_{N}^{2}}$ ${W}_{m} = \frac{{\hat{H}}_{m}^{H}}{{\sum }_{iʹ = 1}^{B} {\hat{H}}_{m}^{H} ⁢ {\hat{H}}_{m} + {\hat{σ}}_{N}^{2}}$ ${W}_{i , m}^{ʹ} = \frac{{\hat{H}}_{i , m}^{H}}{{\sum }_{iʹ = 1}^{B} {\hat{H}}_{iʹ , m}^{H} ⁢ {\hat{H}}_{iʹ , m} + {\hat{σ}}_{N}^{2}}$
   The rf signal receiver of the invention is capable of performing optimal MMSE filtering because of the use of mutually different MMSE filter coefficients at the signal combining unit depending on whether the demodulation is the first-round demodulation or an iterated demodulation.
(10) According to still another aspect of the invention, there is provided an rf signal receiver, wherein the propagation channel and noise power estimation unit comprises: a received signal replica generating unit for generating a replica of the received signal on the basis of the replica signal supplied from the replica signal generating unit and the estimated channel impulse response; and a noise power estimation unit for estimating the noise power by calculating the difference between the output of the reception signal replica generating unit and the received signal.
   The rf signal receiver is capable of improving the accuracy of the estimation for the noise power because the noise power estimation is performed by calculating the difference between the output of the received signal replica generating unit and the received signal.
(11) According to still another aspect of the invention, there is provided an rf signal receiver comprising: a replica signal generating unit for generating as a replica of a transmitted signal a replica signal on the basis of a received signal; a delayed arriving signal removing unit for removing from the received signal the delayed arriving signal at the timing of a predetermined timing pattern through the use of the replica signal; a propagation channel and noise power estimation unit for estimating the noise power; a replica error estimation unit for estimating the replica error on the basis of the replica signal; a signal combining unit for determining the filter coefficients on the basis of the estimated channel impulse response based on the received signal, the estimated noise power and the estimated replica error, and for combining, through the use of the determined filter coefficients, the output of the delayed arriving signal removing unit with the delayed arriving signal removed at the timing of a predetermined timing pattern; and a demodulator unit for demodulating the output of the signal combining unit.
   The rf signal receiver is capable of FFT-processing the delayed arriving signal-removed signals and of despreading the signals with lowered frequency selectivity provided by the removal of the delayed arriving signal. Thus, the rf signal receiver of the invention can eliminate inter-code interferences through the calculations whose amount is not affected by the number of codes. Also, the rf signal receiver of the invention can perform the minimum mean square error filtering, which takes into account the replica signal error-induced components.
(12) According to still another aspect of the present invention, there is provided an rf signal receiver, wherein the signal combining unit is adapted to estimate a channel impulse response at the timing of a predetermined timing pattern, on the basis of the estimated replica error.
(13) According to still another aspect of the invention, there is provided an rf signal receiver, wherein the signal combining unit uses filter coefficients W_{i,m} expressed by equation (D) (where m stands for a natural number; δ̂²N stands for an estimated noise power; B stands for the number of arriving signal removing sections; i and i' stand for natural numbers smaller than the number of the delayed arriving signal elimination sections; Ĥ_{i,m} stands for a transfer function of the m-th propagation channel observed at the i-th delayed arriving signal removing unit; Ĥ^{H}_{i,m} stands for the Hamiltonian for Ĥ_{i,m}; Ĥ_{i',m} stands for a transfer function of the m-th propagation channel observed at the i'-th delayed arriving signal removing section with the uncertainty-based error of the replica signals taken into account; and Ĥ^{H}_{i',m} stands for the Hamiltonian of Ĥ'_{i,m}): ${W}_{i , m} = \frac{{\hat{H}}_{i , m}^{H}}{{\sum }_{iʹ = 1}^{B} {\hat{H}}_{iʹ , m}^{H} ⁢ ʹ ⁢ {\hat{H}}_{iʹ , m} ⁢ ʹ + {\hat{σ}}_{N}^{2}}$
(14) In the rf signal receiver according to still another aspect of the invention, the signal combining unit calculates Ĥ'_{i',m} through the use of equation (E) (where DFT [ ] stands for the time domain-to-frequency domain transform of a signal in [ ]; h'ᵢ and h"ᵢ stand for delay profile of only the arriving signals to be processed at the i-th and i'-th delayed arriving signal removing units; and ρ stands for an estimated replica error): ${\hat{H}}_{iʹ , m} ⁢ ʹ = DFT ⁢ \left[{h}_{i}^{ʹ}+{\sum }_{iʹ = 1 , iʹ \neq i}^{B}\sqrt{ρ}⋅{h}_{i}^{ʹ}\right]$
(15) According to still another aspect of the invention, there is provided an rf signal receiver comprising: a replica signal generating unit for generating a replica signal representative of a replica of a transmitted signal; a delayed arriving signal removing unit for removing from the received signal at the timing of a predetermined timing pattern through the use of the replica signal; a propagation channel and noise power estimation unit for estimating noise power; a signal combining unit for determining filter coefficients on the basis of the estimated channel impulse response, the estimated noise power and the inter-code interference estimated through the number of code multiplexing, and for combining through the use of the determined filter coefficients, the signals from the delayed arriving signal removing unit which have the delayed arriving signal removed at the timing of a predetermined timing pattern; and a demodulation unit for demodulating the output from the signal combining unit.
   The rf signal receiver is capable of eliminating the inter-code interference through the amount of calculation unaffected by the number of code multiplexing, because the FFT processing is applied to the delayed signal-removed signals, making it possible to despread the resultant frequency selectivity-lowered signals. Also, even in the second-round and subsequent demodulation, the inter-code interference is taken into account, thereby improving the quality of the reception signal.
(16) In the rf signal receiver according to another aspect of the invention, the signal combining unit uses filter coefficients W_{i,m} expressed by equation (F) (where m stands for a natural number; Cₘᵤₓ stands for the number of code multiplexing; σ̂²N stands for an estimated noise power; B stands for the number of delayed arriving signal removing units; i and i', stand for natural numbers smaller than the number of delayed arriving signal removing units; Ĥ_{i,m} stands for a transfer function for the m-th propagation channel at the i-th delayed arriving signal removing unit; Ĥ^{H}_{i,m} stands for the Hamiltonian of Ĥ_{i,m}; Ĥ_{i',m} stands for a transfer function for the m-th propagation channel observed at the i'-th delayed arriving signal removing unit; and Ĥ^{H}_{i'm} stands for the Hamiltonian of Ĥ_{i'm}): ${W}_{i , m} = \frac{{\hat{H}}_{i , m}^{H}}{{C}_{mux} {\sum }_{iʹ = 1}^{B} {\hat{H}}_{iʹ , m}^{H} ⁢ {\hat{H}}_{iʹ , m} + {\hat{σ}}_{N}^{2}}$
(17) In the rf signal receiver according to another aspect of the invention, the signal combining unit comprises a minimum mean square error filter adapted to use minimum mean square error filter coefficients as the above-mentioned filter coefficients.
(18) According to still another aspect of the invention, there is provided a method of receiving rf signals comprising the steps of generating a replica signal on the basis of a received signal, said replica signal being representative of a replica of a transmitted signal; removing the delayed arriving signals from the received signal at the timing of a predetermined timing pattern through the use of said replica signal; combining the output signal from the delayed arriving signal removing step with the arriving signal removed at each of said timing; and demodulating the output of the signal combining step.
(19) According to still another aspect of the present invention, there is provided a method of receiving rf signals comprising the steps of generating a replica signal on the basis of the received signal, said replica signal being representative of a replica of a transmitted signal; removing the delayed arriving signals from the received signal at the timing of a predetermined timing pattern through the use of said replica signal; estimating propagation channel and noise power; estimating replica error from said replica signal; determining the filter coefficients on the basis of estimated channel impulse response calculated from the received signal, the estimated noise power and the estimated replica error, and combining through the use of the filter coefficients the delayed arriving signal-removed output signal from the arriving signal removing step; and demodulating the combined output from the combining step.
(20) According to still another aspect of the invention, there is provided a method of receiving rf signals comprising the steps of: generating a replica signal on the basis of the received signal, said replica signal being representative of a replica of a transmitted signal; removing the delayed arriving signals from the received signal at the timing of a predetermined timing pattern through the use of the replica signal; estimating a propagation channel and noise power; determining filter coefficients on the basis of estimated channel impulse response calculated from the reception signal, the estimated noise power and the estimated inter-code interference dependent on the number of code multiplexing, and combining the output signal from the delayed arriving signal removing step with the delayed arriving signal removed at the timing of a predetermined timing pattern; and demodulating the output of the signal combining step.

### Effect of the Invention

In the rf signal receiver of the present invention, the FFT processing can be applied to each of the signals with the delayed components removed at the timing of a predetermined timing pattern. Thus, the FFT processing can be applied to delay component-free signals. Also, the removal of the delayed components makes it possible to apply the despreading to signals with lowered frequency selectivity, thereby eliminating the inter-code interference through the calculation whose amount is unaffected by the number of code multiplexing.

### BRIEF DESCRIPTION OF THE DRAWINGS

Fig. 1 is a block diagram schematically showing a rf signal transmitter according to a first embodiment of the invention.
Fig. 2 shows an example of frame format used in the first embodiment of the invention.
Fig. 3 is a block diagram schematically showing the rf signal receiver according to the first embodiment of the invention.
Fig. 4 shows a figure of a makeup of a MAP detection unit 23 (Fig. 3) according to the first embodiment of the invention.
Fig. 5 is a flowchart showing the operation of the rf signal receiver according to the first embodiment of the invention.
Fig. 6 shows an estimated channel impulse response in the first embodiment of the invention.
Fig. 7 shows an estimated channel impulse response of soft canceller block unit 45-1 in the first embodiment of the invention.
Fig. 8 shows an estimated channel impulse response of soft canceller block unit 45-2 in the first embodiment of the invention.
Fig. 9 shows an estimated channel impulse response of soft canceller block unit 45-3 in the first embodiment of the invention.
Fig. 10 shows an estimated channel impulse response in the initial processing performed and an MMSE filter unit according to the first embodiment of the invention.
Fig. 11 shows an estimated channel impulse response in the subsequent iterated processing performed and an MMSE filter unit according to the first embodiment of the invention.
Fig. 12 shows a propagation channel and noise power estimation unit 22 (Fig. 3) according to the first embodiment of the invention.
Fig. 13 shows a relevant part of the rf signal receiver according to the second embodiment of the invention.
Fig. 14 shows a relevant part of the rf signal receiver according to the third embodiment of the invention.
Fig. 15 shows an example of a MAP detection unit 223 (Fig. 14) according to the third embodiment of the invention.
Fig. 16 shows a relevant part of the rf signal receiver according to the fourth embodiment of the invention.
Fig. 17 shows an example of a propagation channel and noise power estimation unit 322 (Fig. 16) of the fourth embodiment of the invention.
Fig. 18 shows an example of a MAC detection unit 423 according to the fifth embodiment of the invention.
Fig. 19 shows an example of a MAP detection unit 23 according to the sixth embodiment of the invention.
Fig. 20 shows signals arriving at rf signal receiver from a rf signal transmitter through a multipath environment.
Fig. 21 shows subcarriers used in a multicarrier transmission/reception which are in an orthogonal relationship with each other, and subcarrier-to-subcarrier interference caused by the ICI.
Fig. 22 shows subcarriers used in a MC-CDMA transmission/reception system, and the corresponding orthogonal codes of respective subcarriers.
Fig. 23A shows the MC-CDMA signals propagated through the atmosphere and, received at the rf signal receiver.
Fig. 23B shows the MC-CDMA signals propagated through the atmosphere and, received at the rf signal receiver.

### Reference Symbols

In the drawings, reference numeral 1 denotes a S/P conversion unit; 2-1 to 2-4, code-by-code signal processing units; 3, an error-correction coding unit; 4, a bit interleaver unit; 5, a modulator unit; 6, a symbol interleaver unit; 7, a frequency-time spreader unit; 8, a DTCH multiplexing unit; 9, a PICH multiplexing unit; 10, a scrambling unit; 11, an IFFT unit; 12, a GI insertion unit; 21, a symbol synchronization unit; 22, a propagation channel and noise power estimation unit; 23, an MAP detection unit; 24-1 to 24-4, code-by-code MAP decoder units; 28, a replica signal generating unit; 29-1 to 29-4, code-by-code symbol generating units; 30, a bit interleaver unit; 31, a symbol generating unit; 32, a symbol interleaver unit; 33, a frequency-time spreader unit; 34, a DTCH multiplexing unit; 35, a PICH multiplexing unit; 36, a scrambling unit; 37, an IFFT unit; 38, a GI insertion unit; 39, a P/S conversion unit; 41, a delayed signal replica generating unit; 42, an adder unit; 43, a GI elimination unit; 44, an FFT unit; 45-1 to 45-3, soft canceller block units; 46 and 46a, MMSE filter units; 47-1 to 47-4, code-by-code logarithmic likelihood output units; 48, a de-spreader unit; 49, a symbol de-interleaver unit; 50, a soft decision output unit; 61, a propagation channel estimation unit; 62, a preamble replica generating unit; 63, a noise power estimation unit; 70, a MAC unit; 71, a filter unit; 72, a D/A conversion unit; 73, a frequency conversion unit; 74, a transmission antenna; 75, a reception antenna; 76, a frequency conversion unit; 77, an A/D conversion unit; 125, a bit de-interleaver unit; 126, a MAP decoder unit; 130, a bit interleaver unit; 131, a symbol generating unit; 132, a P/S conversion unit; 134, a S/P conversion unit; 135-1 to 135-4, code-by-code interleaving and spreading units; 223, a MAP detector unit; 228, a replica signal generating unit; 232, symbol interleaver units; 249, symbol interleaver units; 250, a soft decision output unit; 322, a propagation channel and noise power estimation unit; 362, a received signal replica generating unit; 363, a noise power estimation unit; 423, an MAP detection unit; 446, a MMSE filter unit; and 478, a replica error estimation unit.

### BEST MODE FOR CARRYING OUT THE INVENTION

### [First Embodiment]

An rf signal receiver of a first embodiment of the invention, capable of achieving excellent performance even in the presence of the ISI and the ICI caused by the arriving signals with delays exceeding the guard interval and/or by the frequency selectivity of propagation channels, will now be described.

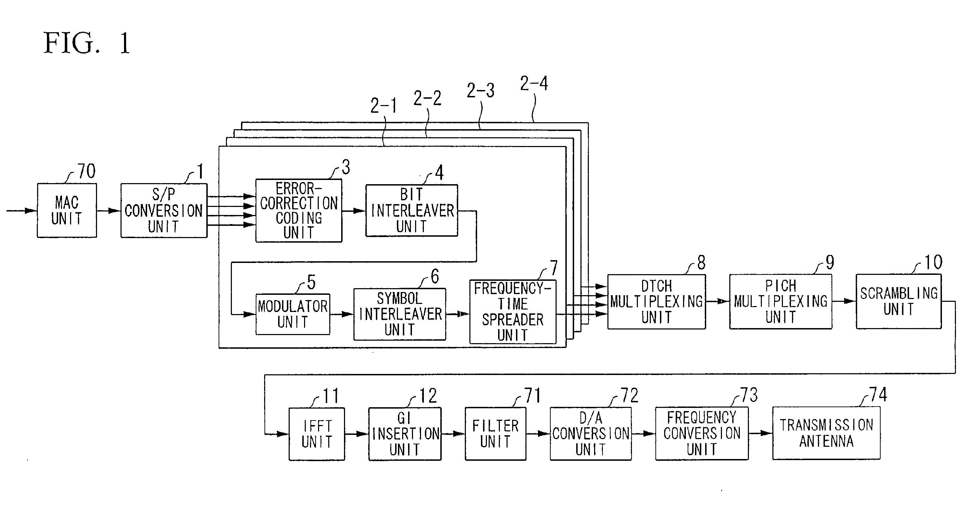

Fig. 1 is a block diagram schematically showing a rf signal transmitter according to a first embodiment of the invention. The transmitter has a S/P (serial-to-parallel) conversion unit 1, code-by-code signal processing units 2-1 to 2-4, a DTCH (data traffic channel) multiplexing unit 8, a PICH (pilot channels) multiplexing unit 9, a scrambling unit 10, an IFFT (inverse fast Fourier transform) unit 11, and a GI (guard interval) insertion unit 12. Each of the code-by-code signal processing units 2-1 to 2-4 has an error-correction coding unit 3, a bit interleaver unit 4, a modulator unit 5, a symbol interleaver unit 6, and a frequency-time spreading unit 7.

Information signals from a MAC (media access control) unit 70 is supplied to a S/P conversion unit 1, whose outputs are supplied to code-by-code signal processing units 2-1 to 2-4. Description of the code-by-code signal processing unit 2-1 will now be given, since other signal processing units 2-2 to 2-4 are identical to the unit 2-1.

The signal applied to a code-by-code signal processing unit 2-1 is subjected at error-correction coding unit 3 to the error-correction coding such as turbo-coding, LDPC (low density parity check) coding, and convolutional coding. The output of the coding unit 3 is subjected, at bit interleaver 4, to the bit-by-bit order exchange, so as to prevent burst errors which may otherwise be caused by the decrease in reception signal power resulting from the frequency-selective fading.

The output of bit interleaver unit 4 is subjected at modulator unit 5 to symbol modulation through BPSK (binary phase shift keying), QPSK (quadrature phase shift keying), 16QAM (16 quadrature amplitude modulation), or 64QAM (64 quadrature amplitude modulation). The output of modulator unit 5 is then applied to symbol interleaver unit 6, where the order of the symbols is changed to prevent burst errors. The output of the symbol interleaver 6 is then subjected at the frequency-time spreading unit 7 to spreading with a predetermined spreading code (channelization code). While OVSF (orthogonal variable spread factor) code is employed in this embodiment as the spreading code, other types of spreading code may be used as well.

It is noted here that this rf signal transmitter has the code-by-code signal processing units 2-2 to 2-4 equal to the number of code multiplexing Cₘᵤₓ (Cₘᵤₓ is a natural number equal or greater than unity). It is assumed in this embodiment that Cₘᵤₓ = 4. It will be seen that the signals spread with mutually different spreading codes are outputted as the output of signal processing unit 2-1 for multiplexing (through addition) at DTCH multiplexing unit 8. Then, at PICH multiplexing unit 9, PICH used for the propagation channel estimation is inserted at a predetermined time position (through time division multiplexing).

The output from the PICH multiplexing unit 9 is then subjected, at the scrambling unit 10, to scrambling with a scrambling code unique to the base station. The output from the scrambling unit 10 is then subjected at the IFFT unit 11 to frequency-to-time conversion. To the conversion output from the IFFT unit 11, the GI is inserted at the GI insertion unit 12. The GI-inserted conversion output is filtered at the filter unit 71, D/A (Digital to Analog) converted at the D/A conversion 72, and then frequency-converted at the frequency conversion unit 73 for transmission through transmission antenna 74 to the rf signal receiver as a transmission signal.

While the transmiter shown in Fig. 1 has both the bit interleaver 4 and the symbol interleaver 6 in code-by-code signal processing units 2-1 to 2-4, one of these interleavers may be dispensed with.

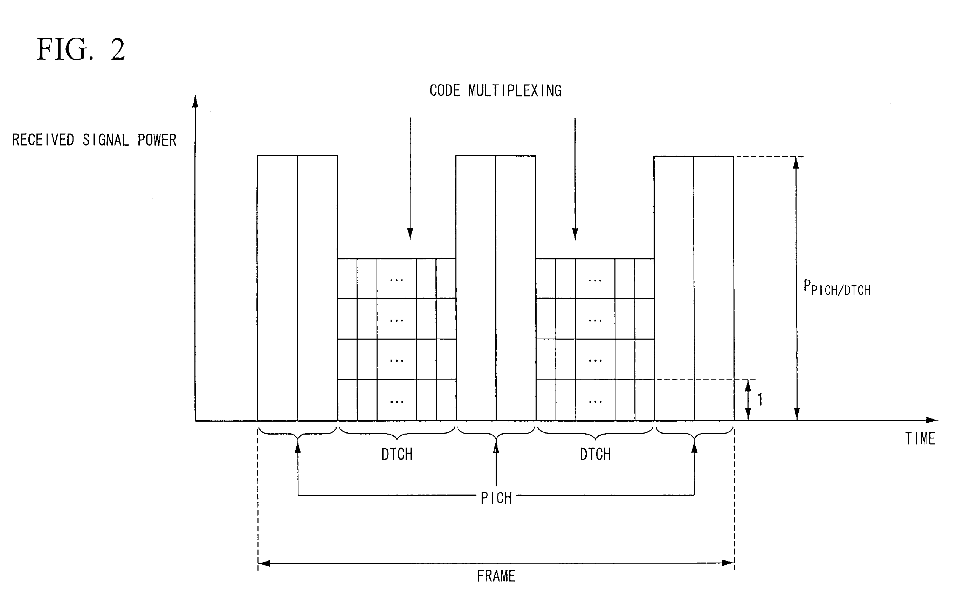

Fig. 2 shows an example of frame format used in the first embodiment of the invention. In Fig. 2, the abscissa and the ordinate showing time and reception signal power, respectively The PICH is arranged at the front, the back, and the center of the frame. On the other hand, the DTCH for data transmission positioned in the first half and in the second half of the frame, with the signals spread with mutually different Cₘᵤₓ spreading codes into code division multiplexed signals. It is assumed in this embodiment that Cₘᵤₓ = 4, to schematically show four stacked data. Fig. 2 also shows the ratio of the PICH reception power to the per code DTCH reception power as P_{PICH/DTCH}.

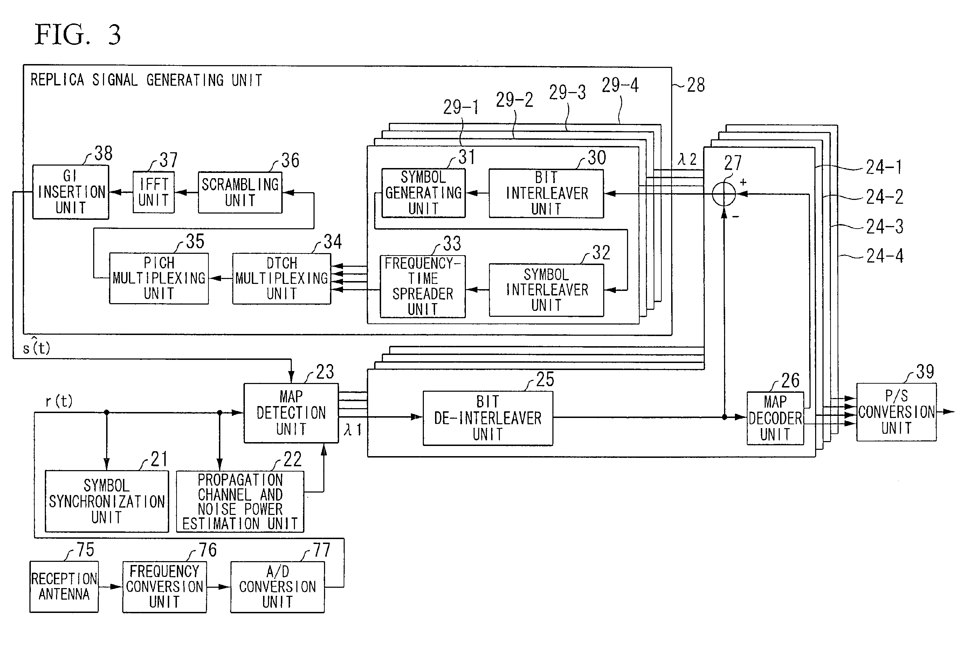

Fig. 3 is a block diagram schematically showing the rf signal receiver according to the first embodiment of the invention. The receiver has a symbol synchronization unit 21, a propagation channel and noise power estimation unit 22, a MAP detection unit 23, code-by-code MAP demodulation units 24-1 to 24-4 (this may be referred to as a signal decision unit), a replica signal generating unit 28, and a P/S (parallel-to-serial) conversion unit 39.

The replica signal generating unit 28 has code-by-code symbol generating units 29-1 to 29-4, a DTCH multiplexing unit 34, a PICH multiplexing unit 35, a scrambling unit 36, a IFFT unit 37, and a GI insertion unit 38. The replica signal generating unit 28 generates a replica signal representative of the transmission signal on the basis of received signal r(t). More specifically, the replica signal generating unit 28 generates the replica signal on the basis of the logarithmic likelihood ratio calculated at the MAP decoder unit 26.

Each of the code-by-code symbol generating units 29-1 to 29-4 has a bit interleaver unit 30, a symbol generating unit 31, a symbol interleaver unit 32, a frequency-time spreading unit 33. On the other hand, each of the code-by-code MAP decoder units 24-1 to 24-4 has a bit de-interleaver unit 25, a MAP decoder unit 26 and an adder unit 27.

The reception signal received at the reception antenna 75 is frequency-converted at the frequency conversion unit 76, whose output is A/D converted at the A/D (Analog to Digital) conversion unit 77 into digitized reception signal r(t) used for symbol synchronization at the symbol synchronization unit 21. The symbol synchronization is achieved at the symbol synchronization unit 21 through the use of the correlation between the GI and the effective signal interval, etc. The synchronization achieved at the symbol synchronization unit 21 governs the operation of the signal processing performed at the subsequent stages.

The propagation channel and noise power estimation unit 22 estimates, through the use of the PICH, the channel impulse response and the noise power. The propagation channel estimation can be performed through various methods, such as generating a PICH replica signal followed by subjecting the replica signal to RLS algorithm to minimize the square error of the absolute value thereof, or determining cross-correlation between the reception signal and the PICH reception signal on both time and frequency domains, or the like.

The noise power estimation may be performed through the use of a channel impulse response estimated from the received PICH to generate a PICH replica, whose differentials provide the estimated noise power.

The channel impulse response and the estimated noise power provided by the propagation channel and noise power estimation unit 22 are supplied to the MAP detector unit 23 (employing a maximum a posteriori probability (MAP) detector and an MAP decoding method) for use in the calculation of bit-by-bit logarithmic likelihood ratio.

The MAP detector unit 23 provides, in the first-round detection operation, a bit-by-bit logarithmic likelihood ratio through the use of the received signal, the channel impulse response and the estimated noise power. The logarithmic likelihood ratio, which indicates that a received bit is likely to be 0 or 1, is calculated on the basis of the bit error rate of a communication channel. In Fig. 3, four outputs are provided in parallel to the code-by-code MAP decoding/replica generating units 24-1 to 24-4, which respectively provide a logarithmic likelihood ratio for a bit assigned to mutually different spreading code. When the code division multiplexing is performed using Cₘᵤₓ mutually different spreading codes, the code-by-code MAP decoding units 24-1 to 24-4 provide Cₘᵤₓ outputs.

In the repetition phase of the above performance to be described below, the bit-by-bit logarithmic likelihood ratio is outputted through the use of the replica signal obtained as a result of the demodulation of the received signal, the channel impulse response and the estimated noise power.

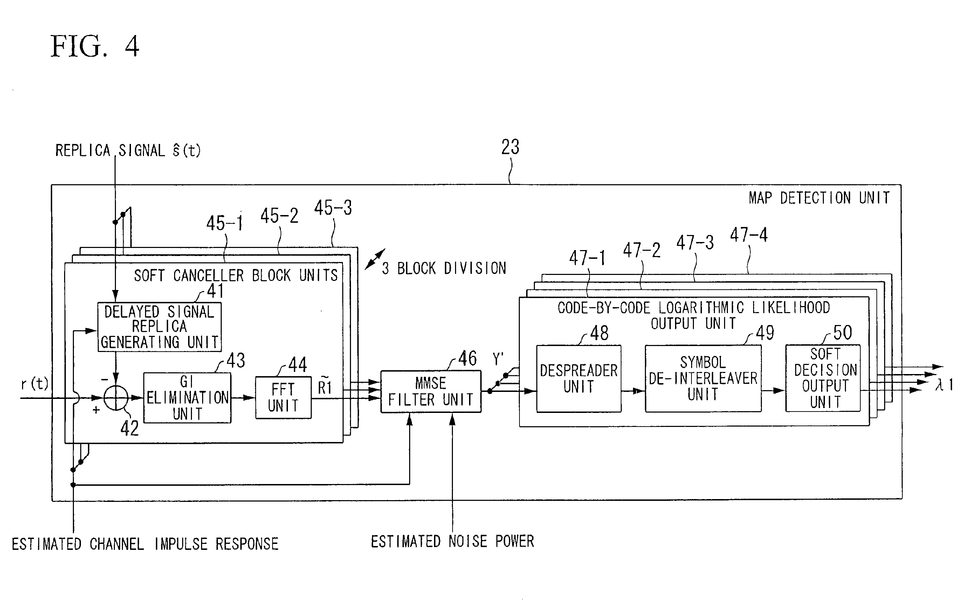

The bit de-interleaver unit 25 of code-by-code MAP decoding units 24-1 to 24-4 subjects the input signal to bit de-interleaving, which is a processing reverse to the interleaving, i.e., restoring the order of bits in the pre-interleaving signal. The output of the bit de-interieaver 25 is subjected at the MAP decoder unit 26 to MAP decoding. More specifically, the MAP decoder unit 26 performs error-correction decoding of the output of the soft decision output unit 50 (Fig. 4, to be described below)of the MAP detector unit 23 to calculate the logarithmic likelihood ratio on a bit-by-bit basis. It is to be noted here that the MAP decoding is a method for providing soft decision results such as the logarithmic likelihood ratio including information bits and parity bits, without performing hard decisions at the time of the ordinary error-correction decoding such as turbo decoding, LDPC decoding and Viterbi decoding. More definitely, in contrast to the hard decision, where a reception signal is recognized as 0 or 1, the soft decision performs the decision on the basis of information indicative of how it is likely to be correct (soft decision information).

The adder 27 calculates difference A2 between the input to the MAP decoder unit 26 and the output thereof, and provides its output to the replica signal generating unit 28.

The input to the unit 28 is provided to the bit interleaver unit 30, which interchanges the difference λ2 on a bit by bit basis. The output of the bit interleaver unit 30 is subjected at the symbol generating unit 31 to symbol modulation with a modulation system identical to the rf transmitter (such as BPSK, QPSK, 16QAM and 64QAM), with the magnitude or λ2 taken into account. The output from the symbol generating unit 31 is subjected at the symbol interleaver unit 32 to change in order on a symbol by symbol basis, whose output is then two-dimensionally spread at the frequency-time spreading unit 33 with a predetermined spreading code (channelization code).

It is to be noted here that the rf signal receiver has a plurality of code-by-code MAP coder units and code-by-code symbol generating units, both equal to the number Cₘᵤₓ of code multiplexing (Cₘᵤₓ is a natural number equal or greater than unity). It is assumed here that Cₘᵤₓ = 4. It will be seen that the signals spread with mutually different spreading codes are outputted from the code-by-code replica generating units 29-1 to 29-4 for multiplexing (addition) at the DTCH multiplexing unit 34. The output of the DTCH multiplexing unit 34 is then supplied to the PICH multiplexing unit 35, where the PICH used for estimating propagation channel is inserted (time multiplexed) at a predetermined position. The output of the PICH multiplexing unit 35 is subjected at scrambling unit 36 to scrambling with a scrambling code unique to the base station. The scrambled output from the scrambling unit 36 is frequency-to-time converted at the IFFT unit 37, whose output receives the GI insertion at the GI insertion unit 38 and is supplied to the MAP detector unit 23 for use in the signal processing in iterated operation mode.

It is to be noted here that after the above-mentioned decoding operation is iterated a predetermined number of times, the output of the MAP decoder unit 26 is supplied to the P/S conversion unit 39 for transmission to an MAC unit (not shown) as demodulation output.

Fig. 4 shows a figure of a makeup of a MAP detection unit 23 (Fig. 3) according to the first embodiment of the invention. The MAP detection unit 23 has soft canceller block units 45-1 to 45-3 (also referred to as arriving signal removing units), the MMSE (minimum mean square error) filter unit 46 (also referred to as combining unit), and the code-by-code logarithmic likelihood ratio output units 47-1 to 47-4 (also referred to as demodulator units).

Each of the soft canceller block units 45-1 to 45-3 has a delayed signal replica generating unit 41, an adder unit 42 (it may be referred to as a signal subtracting unit as well), the GI elimination unit 43, and the FFT unit 44. Each of the soft canceller block units 45-1 to 45-3 is adapted to remove delayed signals from a received signal r(t) at the timing of a predetermined timing pattern through the use of the replica signal supplied from the replica signal generating unit 28. The delayed replica signal generating unit 41 generates delayed signal replica for the timing of a predetermined timing pattern, on the basis of the channel impulse response estimated from the received signal r(t) for a propagation channel and replica signal ŝ(t) supplied from the replica signal generating unit 28 (Fig. 3). The adder unit 42 subtracts from the received signal r(t) the delayed signal replica for each timing of the predetermined timing pattern supplied from the delayed replica signal generating unit 41.

Each of the code-by-code logarithmic likelihood ratio output units 47-1 to 47-4 has a despreading unit 48, a symbol de-interleaver unit 49 and a soft decision output unit 50.

The replica signal ŝ(t) also supplied to the MAP detector unit 23 (Fig. 3) and an estimated channel impulse response ĥ(t) are processed at the delayed signal replica generating unit 41 into a signal representative of the difference between the two. The output of the delayed signal replica generating unit 41 is subtracted at the adder unit 42 from the received signal r(t). The subtraction output from the adder unit 42 is GI-eliminated at the GI elimination unit 43 and then supplied to the FFT unit 44, which performs time-to-frequency conversion to provide the signal R̅i. It should be noted here that the MAP detector unit 23 has B blocks of soft canceller block units (where B is a natural number equal or greater than unity). It is also noted that i is a natural number, with 1≦i≦B.

The MMSE filter unit 46 is adapted to combine the outputs from the soft canceller block units 45-1 to 45-3, which are respectively delay signal-removed at the timing of a predetermined timing pattern. More specifically, the MMSE filter unit 46 subjects the outputs from the units 45-1 to 45-3 to the MMSE filtering through the use of the estimated channel impulse response and the estimated noise power, thereby to provide output signal Y'.

The code-by-code logarithmic likelihood ratio output units 47-1 to 47-4 equal in number to Cₘᵤₓ (Cₘᵤₓ = 4 in this embodiment), process the signal Y' to output the bit-by-bit logarithmic likelihood ratio for each of the bits.

The de-spreader unit 48 of each of the code-by-code logarithmic likelihood ratio output units 47-1 to 47-4 despreads the signal Y' through the use of its specific spreading code. Similarly, the symbol de-interleaver unit 49 changes the order of the symbols of the despread output from the despreading unit 48. The output from the symbol de-interleaver 49 is supplied to soft decision output unit 50, where the soft decision is applied to the signal synthesized at the MMSE filter unit 46. The soft decision output unit 50 provides, responsive to the output from the symbol de-interleaver unit 49, the bit-by-bit logarithmic likelihood ratio λ1 as the soft decision output.

The soft decision output unit 50 calculates the logarithmic likelihood ratio λ1 on the basis of equations (1) to (3) listed below. It will be noted that the soft decision output λ1 for QPSK modulation is given by equation (1) and (2) below, assuming that the output of the symbol de-interleaver unit 49 for the n-th symbol is Zn: $λ ⁢ 1 ( b ⁢ 0 ) = \frac{2 ⁢ R \left[Zn\right]}{\sqrt{2} ⁢ \left[1-μ\left(n\right)\right]}$ $λ ⁢ 1 ( b ⁢ 1 ) = \frac{2 ⁢ Im \left[Zn\right]}{\sqrt{2} ⁢ \left[1-μ\left(n\right)\right]}$
where R[ ] denotes a real part for the component in [ ]; Im[ ], an imaginary part of the component in [ ]; and µ(n) denotes a reference symbol (amplitude of pilot signal) for n symbols. It will be noted that a modulating signal is expressed by equation (3) below: $Zn = \frac{1}{\sqrt{2}} ⁢ \left(b⁢0+jb⁢1\right)$

While it is assumed in the above embodiment that the modulation employed is QPSK the bit-by-bit soft decision output (logarithmic likelihood ratio) λ1 can be obtained in other types of modulation as well.

While the embodiment of Figs. 3 and 4 have two sets of bit and symbol interleaver units, i.e., the bit interleaver unit 30 and the bit de-interleaver unit 25, and the symbol interleaver unit 32 and the symbol de-interleaver unit 49, a single set of them, i.e., either the bit interleaver units 30 and the bit de-interleaver unit 25, or the symbol interleaver 32 and the symbol de-interleaver 49 may be sufficient. In addition, all of the bit interleaver 30, the bit de-interleaver unit 25, the symbol interleaver unit 32, the symbol de-interleaver unit 49 need not be provided.

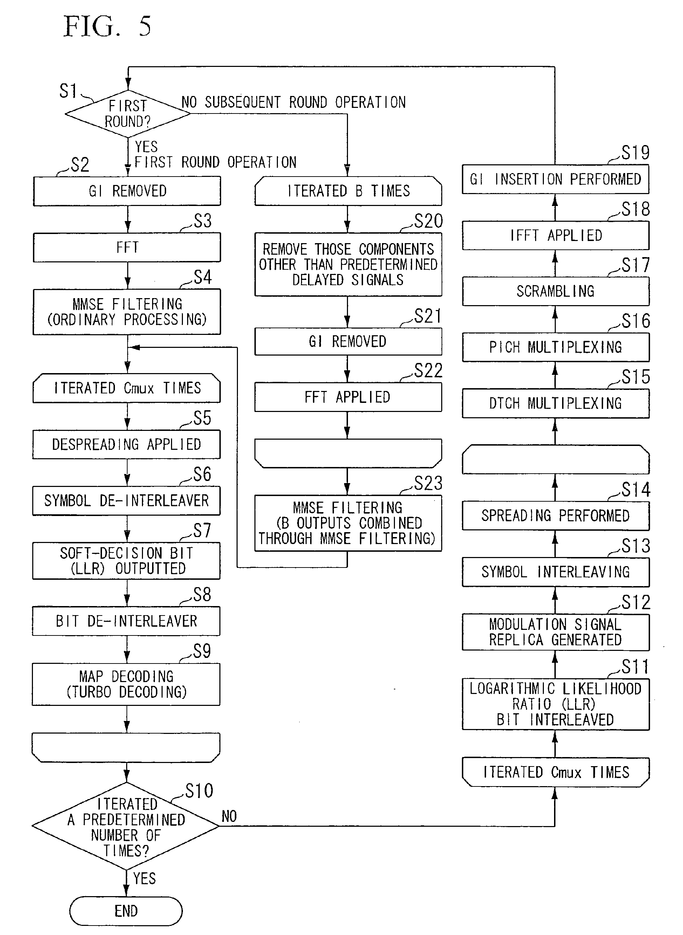

Fig. 5 is a flowchart showing the operation of the rf signal receiver according to the first embodiment of the invention. The MAP detector unit 23 decides whether the operation is a first-round operation (step S1). When step S1 decides that the operation is a first-round operation, the GI elimination unit 43 eliminates a guard interval GI from received signal r(t) (step S2). Then, the FFT unit 44 performs the FFT processing (time-to-frequency conversion) (step S3). Then, the MMSE filter unit 46 performing the ordinary MMSE filtering (step S4).

Subsequently, the de-spreader unit 48 performs despreading (Step S5). Then, the symbol de-interleaver unit 49 performs symbol de-interleaving (step S6). Then, the soft decision output unit 50 performs soft decision outputting operation (step S7). Then, the bit de-interleaver unit 25 performs bit de-interleaving (step S8). Then, the MAP decoder unit 26 performs MAP decoding (step S9). A decision is then made on whether the above performance from steps S5 to S9 has been performed a predetermined number of times (step S10). It is to be noted here that the above operation may be performed, as described above referring to Fig. 3, by Cₘᵤₓ circuits arranged in parallel. In regard to the first-round MMSE filtering, further description will be given later.

If it is decided in step 10 that the processing performed from steps S5 to S9 has not been iterated a predetermined number of times, the bit interleaver unit 30 performs bit interleaving on the logarithmic likelihood ratio through the use of the demodulation output λ2 for Cₘᵤₓ codes (step S11). Then the symbol generating unit 31 generates a replica of the modulating signal (step S12). Then, the symbol interleaver unit 32 performs symbol interleaving (step S13). Then, the frequency-time spreader unit 33 performs two dimensional spreading with a predetermined spreading code (step S14).

After the processing of steps S11 to S14 has been iterated Cₘᵤₓ times, the DTCH multiplexing unit 34 performs DTCH multiplexing (step S15). Then, the PICH multiplexing unit 35 performs the PICH multiplexing (step S16). Then the scrambling unit 36 performs scrambling (step S 17). Then, the IFFT unit 37 performs IFFT processing (step S18). Then, the GI insertion unit 38 inserts the guard interval GI (step S19). The GI-inserted signal in step S19, as a replica signal, is used for iterated demodulation operation.

If the processing of step S1 decides that the operation is not a first-round operation but a repetition operation, the soft canceller block units 45-1 to 45-3 eliminate on a block-by-block basis those portions of the signal other than a predetermined delayed signal component (step S20). Then, the GI elimination unit 43 performs GI elimination processing (step S21). Then, the FFT unit 44 performing the FFT processing (step S22). After the above-mentioned processing from steps S20 to S22 have been performed for B blocks (B is a natural number), the MMSE filter unit 46 performs the minimum mean square error-based combining of the outputs from B blocks, i.e., MMSE filtering (step S23). Subsequently to step S23, the processing proceeds to step S5, performing the processing similar to the first-round operation.

The processing of steps S1 to S9 and S11 to S23 is iterated until it is decided at step S10 that a predetermined number of repetition has been reached.

The processing performed at the soft canceller block units 45-1 to 45-3 will now be described more specifically, referring particularly to the delayed signal replica generating unit 41 and the adder unit 42 of the i-th soft canceller block unit 45-i.

The soft canceller block unit 45-i is adapted to generate hᵢ at the delayed replica signal generating unit 41, and subtract from the received signal r(t) the convolution operation output of hᵢ and the replica signal ŝ(t), thereby to provide the output of the adder 42 (where i is a natural number equal or smaller than B).

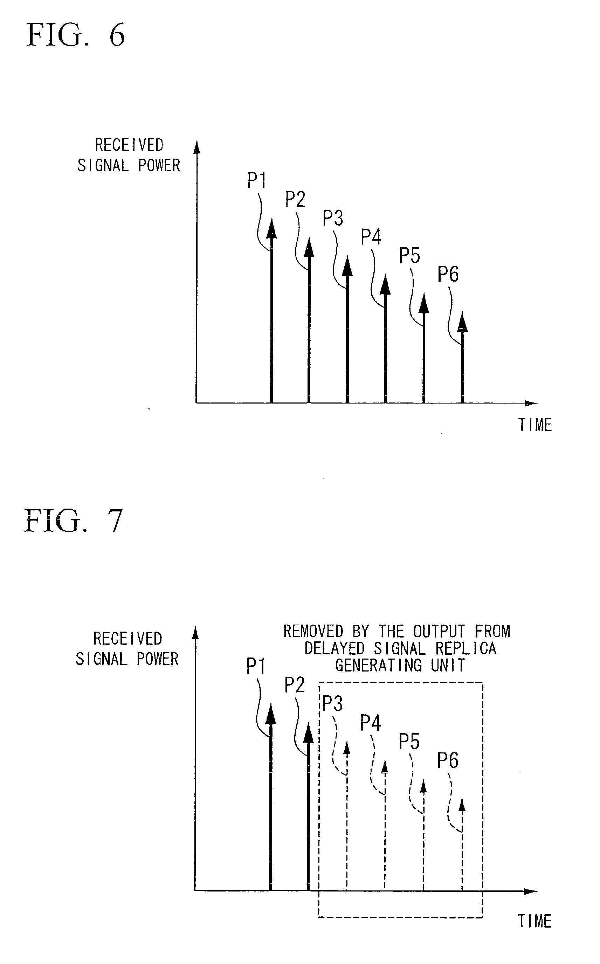

Fig. 6 shows an estimated channel impulse response in the first embodiment of the invention. A description will now be given assuming that the estimated channel impulse response is provided at the propagation channel and noise power estimation unit 22, with the estimated channel impulse response p1 to p6 provided for six propagation channels. It is to be noted that time is taken along the horizontal axis and the reception signal power along the vertical axis. It is also assumed that the soft canceller block units 45-1 to 45-3 split the delayed signals received through six propagation channels into three delayed signal groups each consisting of two delayed signals.

Fig. 7 shows an estimated channel impulse response of soft canceller block unit 45-1 in the first embodiment of the invention. The soft canceller block unit 45-1 is adapted to define h₁(t) the third path (p3), the fourth path (p4), the fifth path (p5) and the sixth path (p6) enclosed by the dotted line, thereby to generate the estimated response at the delayed signal replica generating unit 41. The delayed replica signal generating unit 41 provides an output of the convolutional operation between h₁(t) and ŝ(t). Thus, the adder unit 42 provides the result of subtraction of the delayed replica signal generating unit 41 output, i.e., the result of the convolution operation between h₁(t) and ŝ(t), from the received signal r(t). Therefore, if the replica is correctly generated, the adder unit 42 output can be taken to represent a signal received through a propagation channel represented by (h(t) - h₁(t)). It follows therefore that the output from the adder unit 42 consists of signals p1 and p2 shown by solid lines in Fig. 7.

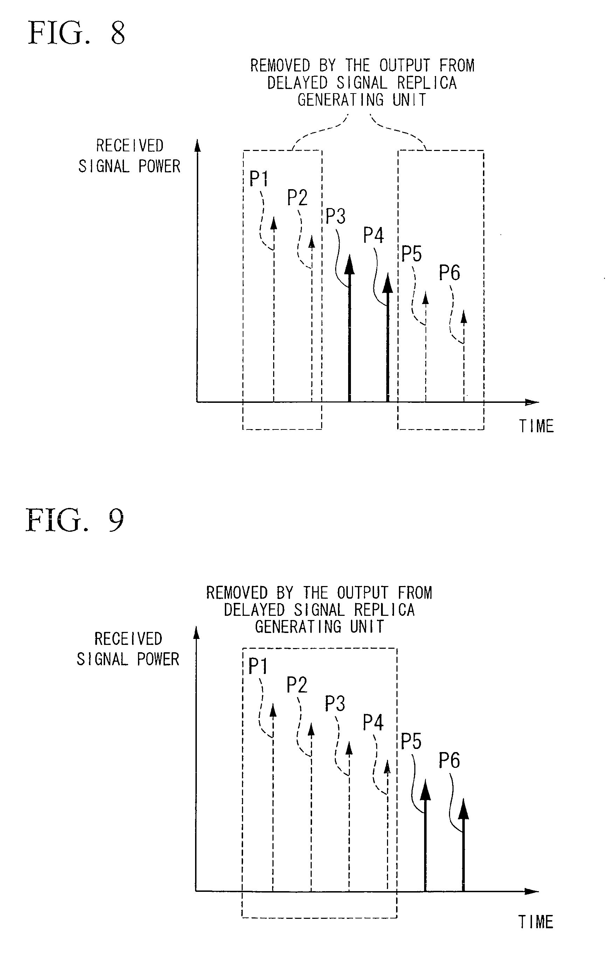

Fig. 8 shows an estimated channel impulse response of soft canceller block unit 45-2 in the first embodiment of the invention. The soft canceller block unit 45-2 is adapted to define as h₂(t) the first path (p1), the second path (p2), the fifth path (p5) and the sixth path (p6) enclosed by the dotted line, thereby to generate the estimated response at the delayed signal replica generating unit 41. The adder unit 42 provides an output of the convolutional operation between h₂(t) and ŝ(t). Thus, the adder unit 42 provides the result of subtraction of the adder unit 42 output from the received signal r(t). Therefore, if the replica is correctly generated, the adder unit 42 output can be taken to represent a signal received through a propagation channel represented by (h(t) - h₂(t)). It follows therefore that the output from the adder unit 42 consists of signals p3 and p4 shown by solid lines in Fig. 8.

Fig. 9 shows an estimated channel impulse response of soft canceller block unit 45-3 in the first embodiment of the invention. The soft canceller block unit 45-3 is adapted to define as h₃(t) the first to the fourth paths (p1, p2, p3 and p4) enclosed by the dotted line, thereby generating the estimated response at the delayed signal replica generating unit 41. The adder unit 42 provides an output of the convolutional operation between h₃(t) and ŝ(t). Thus, the adder unit 42 provides the result of subtraction of the unit 41 output from the received signal r(t). Therefore, if the replica is correctly generated, the adder unit 42 output can be taken to represent a signal received through a propagation channel represented by (h(t) - h₃(t)). It follows therefore that the output from the adder unit 42 consists of signals p5 and p6 shown by solid lines in Fig. 9.

In the description given above referring to Figs. 7 to 9, the soft canceller block units 45-1 to 45-3 are assumed to set the predetermined time on the basis of the number of the recognized delayed signals. More specifically, the replica signal generated for the subtraction differ from one of the soft canceller block units 45-1 to 45-3 to another, depending on the estimated channel impulse response and the number of recognized delayed signals. Alternative approaches outlined below can be taken as well.

For example, the soft canceller block units 45-1 to 45-3 may set the predetermined timing on the basis of the amount of delay of the recognized delayed signal. More specifically, the arriving time zone of the delayed signals is divided into B time slots to thereby determine during which slot the delayed signal arrived and, based on the determination, which one of the soft canceller block units should perform the processing, thereby to allow the replica signal for the subtraction to be generated on a soft canceller block unit-by-soft canceller block unit basis, depending on the amount of delay of the recognized delayed signal.

Alternatively, the soft canceller block units 45-1 to 45-3 may be adapted to set the predetermined timing pattern depending on the power of the received signal. More specifically, the whole of the received signal may be divided, in the order of arrival, into B segments each having a substantially uniform signal power, based on which one of the soft canceller block units 45-1 to 45-3 is assigned for processing, thereby allowing the replica signal for the subtraction to be generated on a soft canceller block unit-by-soft canceller block unit basis, on the power of the recognized delayed signal.

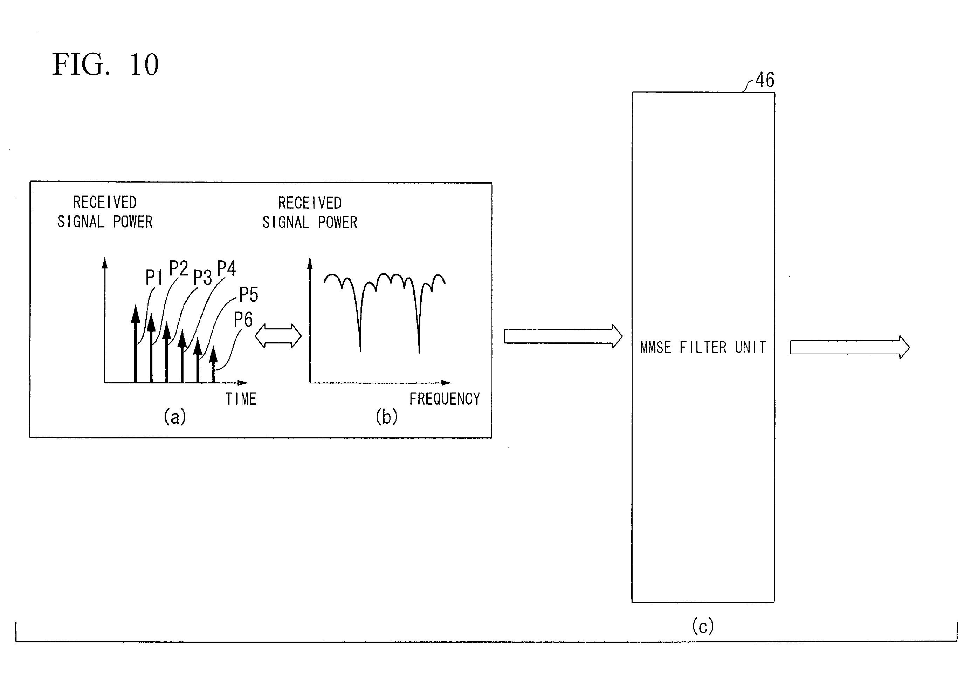

Fig. 10, showing in (a), (b) and (c), shows an estimated channel impulse response in the initial processing performed and an MMSE filter unit according to the first embodiment of the invention. The MMSE filter unit 46, respectively, a description will now be given about the operation of the MMSE filter 46 shown in Fig. 4 and steps S4 and S23 in Fig. 5.

To describe the operation of the MMSE filter unit 46 for the first-round processing, the received signal R can be expressed in the frequency domain by equation (4): $R = \hat{H} ⁢ S + N$
where Ĥ stands for the transfer function for an estimated propagation channel and, assuming that the delayed signals reside only within GI, Ĥ can be expressed by a diagonal matrix of Nc∗Nc, with Nc representing the number of subcarriers for spread OFCDM, and with H given by equation (5) below: $\hat{H} = \left(\begin{matrix}{\hat{H}}_{1} & & & 0 \\ & {\hat{H}}_{2} & & \\ & & ⋱ & \\ 0 & & & {\hat{H}}_{NC}\end{matrix}\right)$

S, which stands for a transmitted symbol, can be expressed as a vector of Nc∗1 as shown by equation (6): ${S}^{T} = \left({S}_{1}, ⁢, {S}_{2}, ⋯, {S}_{NC}\right)$

Similarly, received signal R and noise component N can be expressed as a vector of Nc∗1 as shown by equation (7) and (8): ${R}^{T} = \left({R}_{1}, ⁢, {R}_{2}, ⋯, {R}_{NC}\right)$ ${N}^{T} = \left({N}_{1}, ⁢, {N}_{2}, ⋯, {N}_{NC}\right)$

It will be noted in equations (6) to (8) that suffix T stands for a transport matrix.

In response to a received signal expressed by the above equation, the MMSE filter unit 46 provides output Y expressed as a vector of Nc∗1 as shown in equation (9): $Y = WR$

MMSE filter unit 46 determines MMSE filter coefficient W on the basis of the estimated channel impulse and the estimated noise power. The filter coefficient W can be expressed by a diagonal matrix of Nc∗Nc as shown by equation (10): $W = \left(\begin{matrix}{W}_{1} & & & 0 \\ & {W}_{2} & & \\ & & ⋱ & \\ 0 & & & {W}_{NC}\end{matrix}\right)$

When the spreading is performed in frequency domain, the elements of the MMSE filter coefficients Wₘ are given by equation (11): ${W}_{m} = \frac{{\hat{H}}_{m}^{H}}{{\hat{H}}_{m}^{H} ⁢ {\hat{H}}_{m} + \left({C}_{mux}-1\right) ⁢ {\hat{H}}_{m}^{H} ⁢ {\hat{H}}_{m} + {\hat{σ}}_{N}^{2}} = \frac{{\hat{H}}_{m}^{H}}{{C}_{mux} ⁢ {\hat{H}}_{m}^{H} ⁢ {\hat{H}}_{m} + {\hat{σ}}_{N}^{2}}$

It should be noted here that $( {C}_{mux} - 1 ) {\hat{H}}_{m}^{H} {\hat{H}}_{m}$
shows interference components arising from other codes in code multiplexing process, and that ${\hat{σ}}_{N}^{2}$
shows estimated noise. And, suffix H stands for the Hamiltonian (conjugate transport).

The elements of the MMSE filter coefficients Wₘ can be expressed by equation (12), assuming that code-to-code orthogonality is maintained in the time domain spreading: ${W}_{m} = \frac{{\hat{H}}_{m}^{H}}{{\hat{H}}_{m}^{H} ⁢ {\hat{H}}_{m} + {\hat{σ}}_{N}^{2}}$

It is to be noted that (a) to (c) in Fig. 10 show the inputting of a signal to the MMSE filter unit 46 in the first-round processing as shown in Fig. 6, with the above coefficients applied thereto, which signal has passed through the propagation channels.

In Fig. 10 (a) shows the channel impulse response p1 to p6 shown in Fig. 6, while (b) shows transfer function, wherein the same set of the channel impulse response is shown in frequency domain. It will be noted in Fig. 10 (b), where the horizontal axis shows frequency and the vertical axis shows power, that in the first-round processing the frequency selectivity is high (i.e., the power variation is very steep in terms of the change in frequency). This indicates that, in MC-CDMA, the code-to-code orthogonality is collapsed, to cause inter-code interferences.

The operation of the MMSE filter unit will now be described for the iterated operation phase. During the iterated demodulation phase, the replica signal r̂i used in the i-th soft canceller block unit 45-i can be expressed by equation (13): ${\hat{r}}_{i} = \left(\hat{h}-{\hat{h}}_{i}\right) ⊗ \hat{s}$
where ĥᵢ stands for delayed signal profile obtained from delayed signals only to be processed in the i-th soft canceller block 45-i and, ŝ(t) stands for a replica signal calculated on the basis of logarithmic likelihood ratio λ2 obtained from the preceding MAP decoding. $⊗$
shows the convolution operation. Thus, the output of soft canceller block unit 45-i, i.e., output R̅i of the i-th soft canceller block unit 45 shown in Fig. 4, is given by equation (14) below: ${\overline{R}}_{i} = R - {\hat{R}}_{i} = [ {\hat{H}}_{1} ⁢ {\hat{H}}_{2} ⋯ {\hat{H}}_{B} ] {\left[{\hat{S}}^{T}⁢{\hat{S}}^{T}⋯{\hat{S}}^{T}\right]}^{T} + Δ = \hat{H} ⁢ \hat{S} + Δ = {\left[\begin{matrix}_T & _T & & _T \\ {R}_{1} & {R}_{2} & ⋯ & {R}_{B}\end{matrix}\right]}^{T}$
where Δ is assumed to include the replica uncertainty-based error signal and thermal noise components. At the same time, the output Y' of MMSE filter unit 46 can be expressed by equation (15) below: $\dot{Y} = Wʹ ⁢ \overline{R} = \left[{W}_{1}^{ʹ}⁢{W}_{2}^{ʹ}⋯{W}_{B}^{ʹ}\right] ⋅ {\left[\begin{matrix}_T & _T & & _T \\ {R}_{1} & {R}_{2} & ⋯ & {R}_{B}\end{matrix}\right]}^{T}$

Assuming here that the replica signal has been generated with high accuracy, and that Δ does not include the replica-based components but only thermal noise components, a partial matrix of the MMSE filter coefficients can be expressed as a diagonal matrix as shown in equation (16): ${W}_{i}^{ʹ} = \left(\begin{matrix}{W}_{i , 1}^{ʹ} & & & 0 \\ & {W}_{i , 2}^{ʹ} & & \\ & & ⋱ & \\ 0 & & & {W}_{i , Nc}^{ʹ}\end{matrix}\right)$

In addition, the input signal to the MMSE filter 46 has come to have a lowered frequency selectivity approaching the flat fading state. Therefore, assuming that there is no inter-code interference in the code multiplexing step, the elements can be given by equation (17) as follows: ${W}_{i , m}^{ʹ} = \frac{{\hat{H}}_{i , m}^{H}}{{\sum }_{iʹ = 1}^{B} {\hat{H}}_{iʹ , m}^{H} ⁢ {\hat{H}}_{iʹ , m} + {\hat{σ}}_{N}^{2}}$

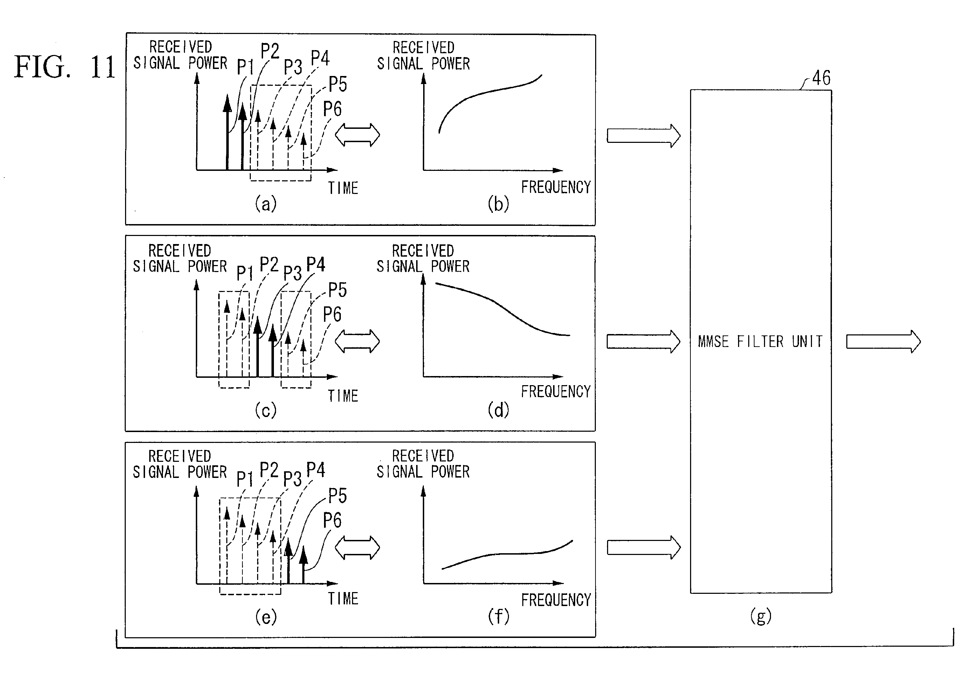

Fig. 11, showing in (a) to (g), shows an estimated channel impulse response in the subsequent iterated processing performed and an MMSE filter unit according to the first embodiment of the invention. It will be noted here that Ĥ_{i',m} is a transfer function for the m-th propagation channel in the i'-th soft canceller block unit, while Ĥ^{H}_{i',m} denotes the Hamiltonian for Ĥ_{i',m}. It will be seen in Fig. 11 that the signals, which have passed through the propagation channels shown in Figs. 7 to Fig. 9 in the repetition processing mode, are inputted to the MMSE filter unit 46 with the above-mentioned MMSE filter coefficients. It will also be noted here that the number B of soft canceller block units is assumed to be three.

The MMSE filter 46 is adapted to use, for the first-round demodulation, the MMSE filter coefficients Wₘ given in equation (11) or (12) and to use, for the iterated demodulations, the MMSE filter coefficients W'_{i,m} given in equation (17).

It will be seen here that (a), (c) and (e) of Fig. 11 show, as in the case of Fig. 10 (a), channel impulse response p1 to p6 shown in Fig. 7 to Fig. 9. Similarly, it will be seen that Figs. 11 (b), (d), (f) show transfer functions expressing channel impulse responses p1 to p6 in terms of frequencies. In these drawings, frequency and power are shown along the horizontal and vertical axes, respectively. It will be seen that in the iterated demodulation processing, the frequency selectivity is lowered (very limited power fluctuation for a frequency fluctuation). Under this state, the code-to-code orthogonality is maintained in the MC-CDMA, so that inter-code interference being hard to occur.

As stated above, the iterated processing brings about the advantage of the removal of delayed signal having a delay exceeding the guard interval GI, as well as the elimination of inter-code interference.

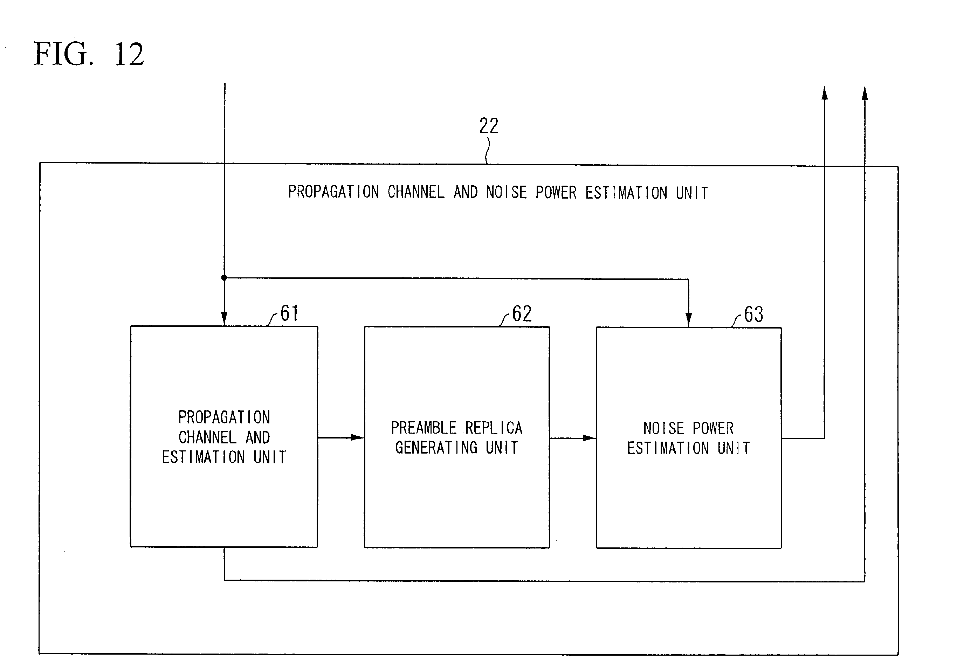

Fig. 12 shows a propagation channel and noise power estimation unit 22 (Fig. 3) according to the first embodiment of the invention. The propagation channel and noise power estimation unit 22 has a propagation channel estimation unit 61, a preamble replica generating unit 62 and a noise power estimation unit 63.

The propagation channel estimation unit 61 is adapted to estimate the channel impulse response through the use of the PICH contained in the received signal. The preamble replica generating unit 62 generates PICH replica signal through the use of the estimated pulse impulse response supplied from the propagation channel estimation unit 61 and the known PICH signal waveform. The noise power estimation unit 63 performs the noise power estimation by calculating the difference of the PICH replica signal provided by the preamble replica generating unit 62 from the PICH component contained in the received signal.

Besides the above approach, the use of the RLS algorithm to provide the minimum mean square error-based estimation and/or the frequency correlation-based estimation can be used.

As stated above, according to the first embodiment of the invention, there is provided an rf signal receiver, wherein the delayed signal replica generating unit 41 removes from the received signal r(t) the delayed signal through the use of the replica signal supplied from the replica signal generating unit 28 at each timing of the predetermined timing pattern, wherein the MMSE filter unit 46 combines the delayed signal-removed output with the delayed signal components removed at each timing of the predetermined timing pattern, and wherein the combined signal is subjected at the soft decision output unit 50 to soft decision, thereby allowing delay signal-removed signals to be FFT processed. Also, in the receiver of the present embodiment, the removal of the delayed signal makes it possible to apply the despreading to the signal of lowered frequency selectivity, thereby to eliminate the inter-code interference by the calculation whose amount is unaffected by the number of codes.

### [Second Embodiment]

The second embodiment assumes the error-correction codes to be employed in each of the codes.

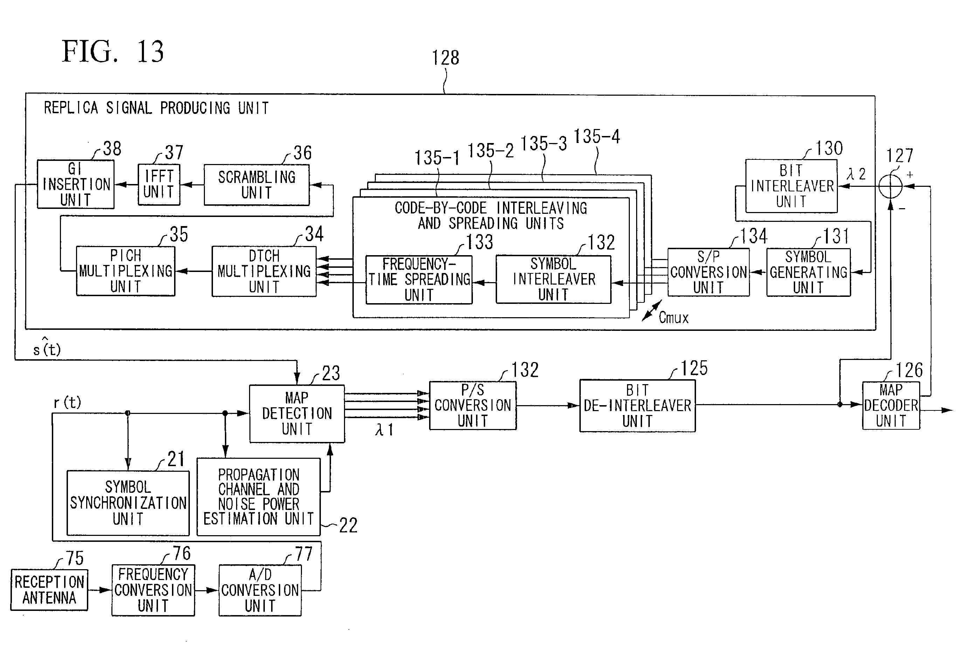

Fig. 13 shows a relevant part of the rf signal receiver according to the second embodiment of the invention. The receiver is substantially identical in its makeup to the receiver of the first embodiment (Fig. 3), except for the code-by-code MAP demodulation units 24-1 to 24-4 in the latter being replaced by a corresponding structural element unique to the second embodiment.

Referring to Fig. 13, the bit-by-bit logarithmic likelihood ratio provided by the MAP detection unit 23 is supplied to a P/S conversion unit 132 for parallel-to-serial conversion, whose output is subjected at a bit de-interleaver unit 125 to bit-by-bit de-interleaving. The output of the bit de-interleaver unit 125 is MAP decoded by a MAP decoder unit 126. It is noted here that the MAP decoding provides logarithmic likelihood ratio as well as information bits and parity bits, without performing hard decision in the ordinary error-correction decoding such as turbo decoding, LDPC decoding and Viterbi decoding.

Subsequently, the difference λ2 between the input to and the output from the MAP decoder unit 126 is calculated at an adder unit 127 to provide the adder output to a replica signal generating unit 128. The replica signal generating unit 128 has a bit interleaver unit 130, a symbol generating unit 131, a S/P conversion unit 134, a code-by-code symbol interleaver/spreader units 135-1 to 135-4, the DTCH multiplexing unit 34, the PICH multiplexing unit 35, the scrambling unit 36, the IFFT unit 37, and the GI insertion unit 38. Each of the code-by-code symbol interleaver/spreader units 135-1 to 135-4 has the symbol interleaver unit 132 and the frequency-time spreading unit 133.

The input to the replica signal generating unit 128 is supplied to the bit interleaver unit 130, where the bit-by-bit interchange of λ2 is performed. The output of the bit interleaver unit 130 is subjected at the symbol generating unit 131 to symbol modulation such as BPSK, QPSK, 16QAM, and 64QAM. The output of the symbol generating unit 131 is serial-to-parallel converted at the S/P conversion unit 134, whose parallel outputs are supplied in parallel to the code-by-code symbol interleaver/spreader units 135-1 to 135-4 equal in number to Cₘᵤₓ.

The parallel inputs to the code-by-code symbol interleaver/spreader units 135-1 to 135-4 are respectively subjected at the symbol interleaver 132 to symbol-by-symbol exchange of the order in which the symbols are arranged, and then supplied to the frequency-time spreader unit 133. The frequency-time spreading unit 133 applies the two dimensional spreading to the output from the P/S conversion unit 132 with predetermined spreading codes (channelization codes). The outputs of the code-by-code symbol interleaver/spreader units 135-1 to 135-4 are supplied to the DTCH multiplexing unit 34 for further processing identical to that of the first embodiment.

In the rf signal receiver of the second embodiment shown in Fig. 13, the iterated decoding removes the delayed signals with delay amount exceeding GI and, at the same time, the inter-code interference as well.

While the rf signal receivers shown in Fig. 4 and Fig. 13 have the bit interleaver unit 130 and the bit de-interleaver unit 125, and the symbol interleaver units 132 and the symbol de-interleaver unit 49, either the former (the bit interleaver unit 130 and the bit de-interleaver unit 125) or the latter (the symbol interleaver units 132 and the symbol de-interleaver unit 49) may be sufficient, dispending with the other set of the interleaver unit and de-interleaver unit. All the bit interleaver unit 130, the bit de-interleaver unit 125, the symbol interleaver units 132, the symbol de-interleaver unit 49 need not be provided, as is the case with the first embodiment.

### [Third Embodiment]

A description will now be given referring to an rf signal receiver of a third embodiment of the invention adapted to receive multicarrier signals which have not been spread.

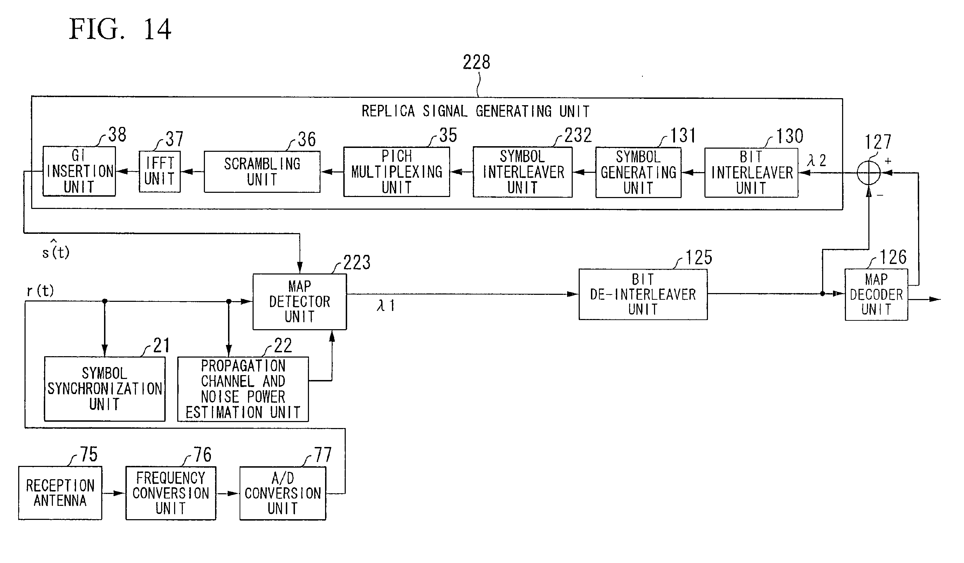

Fig. 14 shows a relevant part of the rf signal receiver according to the third embodiment of the invention. The rf signal receiver of this embodiment is substantially identical in its makeup to the second embodiment (Fig. 13), except that the MAP detector unit 23; the replica signal generating unit 128; and the code-by-code symbol interleaver/spreader units 135-1 to 135-4, the symbol interleaver unit 132, the frequency-time spreader unit 133 and the DTCH multiplexing unit 34, which are included in the replace signal generating unit 128, of the embodiment of Fig. 13 are modified.

In the rf signal receiver shown in Fig. 14, the bit-by-bit logarithmic likelihood ratio outputtted from a MAP detector unit 223 is subjected at the bit de-interleaver unit 125 to bit-by-bit interleaving. The output of the bit de-interleaver unit 125 is then supplied to the MAP decoder unit 126 for MAP decoding. It is to be noted here that MAP decoding is adapted, as in the case of the second embodiment, to provide the logarithmic likelihood ratio even for information bits and parity bits, without performing hard decisions performed in ordinary error-correction decoding such as turbo decoding, LDPC decoding, and Viterbi decoding.

The difference λ2 between the input to and the output from MAP decoder unit 126 is calculated at the adder unit 127 and provided to the bit interleaver unit 130 of the replica signal generating unit 228. The bit interleaver unit 130 performs bit-by-bit exchange of the position of λ2 to provide an output, which is provided to the symbol generating unit 131 for conversion into λ2-dependent symbols based on BPSK, QPSK, 16QAM and 64QAM. The symbol sequence outputted from the symbol generating unit 131 is subjected at the symbol interleaver unit 232 to symbol-by-symbol order exchange and supplied to the PICH multiplexing unit 35. Description of subsequent signal processing will be omitted, because it is substantially identical to that of the first embodiment (Fig. 3).

The rf signal receiver of the third embodiment shown in Fig. 14 adapted to receive multicarrier signals is capable of removing delayed signal components with delay exceeding the guard interval GI, through the iterated decoding.

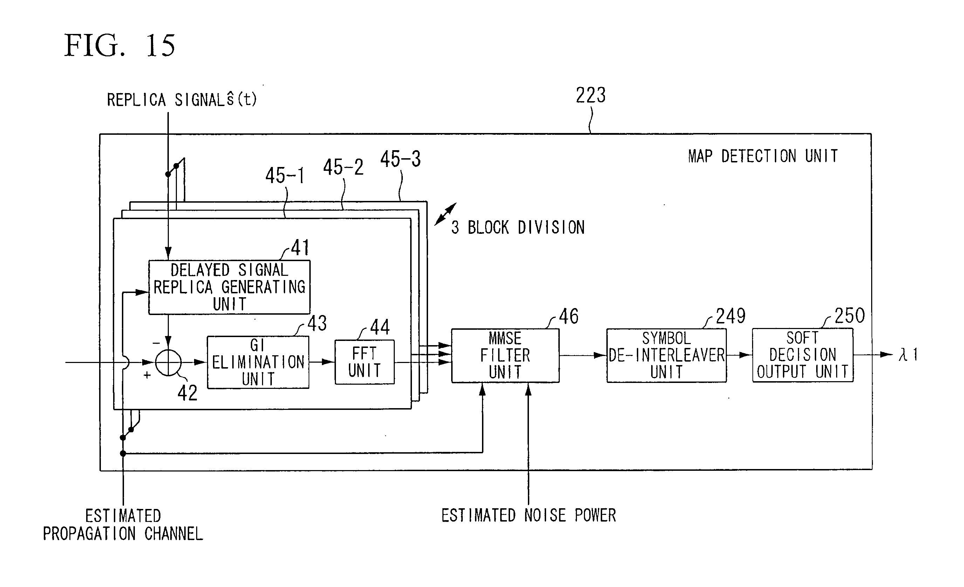

Fig. 15 shows an example of a MAP detection unit 223 (Fig. 14) according to the third embodiment of the invention. The makeup of the MAP detection unit 223 is substantially identical to the first embodiment (Fig. 4), except that the code-by-code logarithmic likelihood ratio output units 47-1 to 47-4, de-spreader unit 48, symbol de-interleaver unit 49 and soft decision output unit 50 of the latter are modified compared with the former.

More specifically the MAP detector unit 223 in Fig. 15 has B soft canceller block units 45-1 to 45-B (B=3 in this embodiment), the MMSE filter unit 46 for combining the outputs from the soft canceller block units 45-1 to 45-B in accordance with the MMSE weights, a symbol de-interleaver unit 249 for subjecting the output symbol sequence of the MMSE filter unit 46 to the symbol-by-symbol order exchange, and a soft decision output unit 250 for providing bit-by-bit logarithmic likelihood ratio for the output of the symbol interleaver unit 249.

Further description of soft canceller block units 45-1 to 45-3 and the MMSE filter unit 46 will be omitted, because these structural elements are identical in their function to those in the first embodiment (Fig. 4).

### [Fourth Embodiment]

A description will now be given referring to a fourth embodiment based on a noise power estimation method different from the first embodiment.

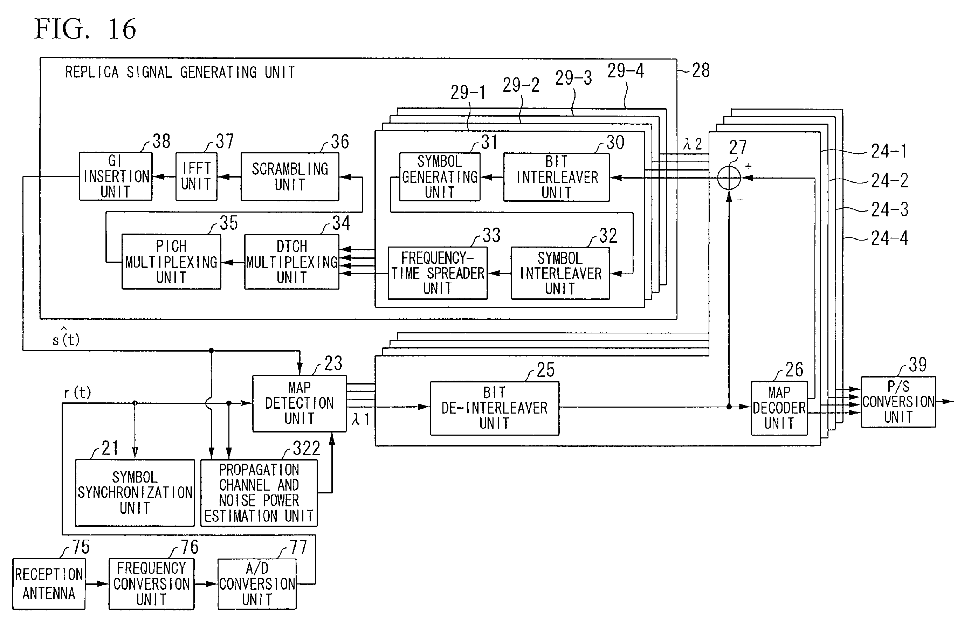

Fig. 16 shows a relevant part of the rf signal receiver according to the fourth embodiment of the invention. The receiver is substantially identical in its makeup to the first embodiment (Fig. 3), except for the propagation channel and noise power estimation unit 22 employed in the latter. More specifically, while the propagation channel and noise power estimation unit 22 of the first embodiment has only the received signal r(t) applied thereto, the propagation channel and noise power estimation unit 322 in Fig. 16 has the replica signal ŝ(t) from the replica signal generating unit 28 supplied thereto, in addition to the received signal r(t).

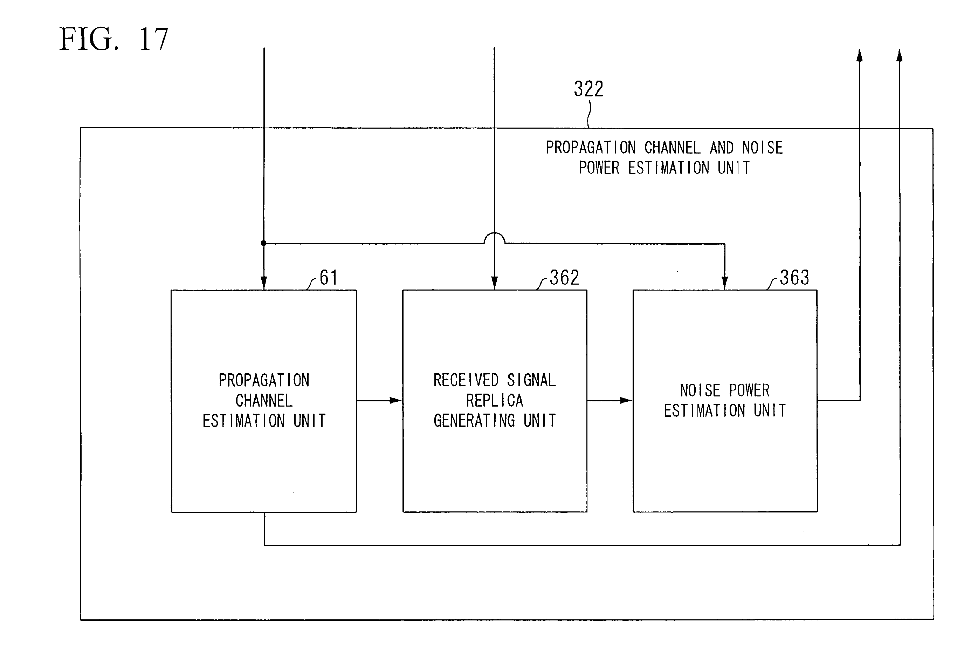

Fig. 17 shows an example of a propagation channel and noise power estimation unit 322 (Fig. 16) of the fourth embodiment of the invention. The propagation channel and noise power estimation unit 322 has the propagation channel estimation unit 61, a received signal replica generating unit 362 and a noise power estimation unit 363.

The propagation channel estimation unit 61 is adapted to estimate the channel impulse response through the use of the PICH included in the received signal.

The received signal replica generating unit 362 generates the replica of the received signal r(t) on the basis of the replica signal supplied from the replica signal generating unit 28 and the estimated channel impulse response. More specifically, the received signal replica generating unit 362 generates the replicas of the PICH and the DTCH on the basis of the estimated channel impulse response ĥ(t) supplied from the propagation channel estimation unit 61, and the replica signal ŝ(t) derived from the PICH signal waveform, which is known, and the bit-by-bit logarithmic likelihood ratio λ2 obtained from the output of the MAP decoder unit 26.

The noise signal power estimation unit 363 estimates the noise power through the calculation of the difference of the received signal r(t) from the replica signal generated by the received signal replica generating unit 362 and expressed by the following formula, i.e., $\hat{h} \left(t\right) ⊗ \hat{s} \left(t\right)$
Thus, this embodiment permits the estimated noise power obtained at the noise signal power estimation unit 363 to include both the error in MAP demodulation output and the Gaussian noise, thereby to provide more appropriate MMSE filter coefficients for the MMSE filter unit 46.

It will be noted here that the makeup of the rf signal receiver of this embodiment is applicable to the receivers of the second and third embodiments.

### [Fifth Embodiment]

A description will now be given referring to a fifth embodiment based on an MAP detector unit different from the first embodiment (Fig. 3).

The MMSE filter coefficients used in the MMSE filter unit 46 (Fig. 4) employed in the first embodiment are based only on the thermal noise components in equation (14), on the assumption that the replica signals are generated with high accuracy. In contrast, the fifth embodiment is based on the MMSE filtering with errors due to the uncertainty of replica signals taken into account.

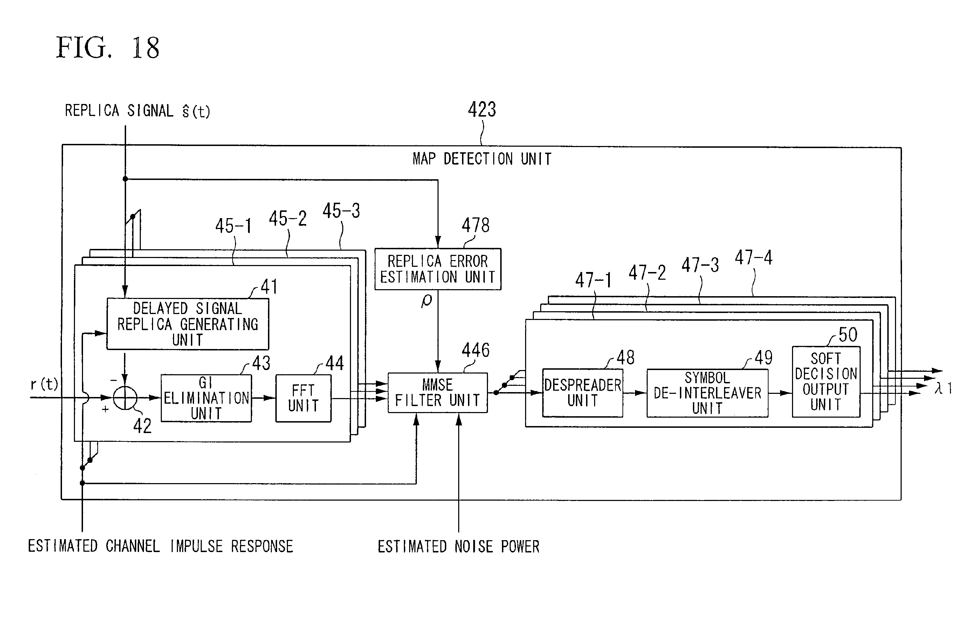

Fig. 18 shows an example of a MAC detection unit 423 according to the fifth embodiment of the invention. The MAP detector unit 423 is substantially identical to the MAP detector unit 23 (Fig. 4) of the first embodiment, except that it has a replica error estimation unit 478 for estimating errors in the replica signal supplied thereto, so that the estimated error may be supplied to the MMSE unit 446 together, as in the ease of the first embodiment, with the outputs from the soft canceller block units 45-1 to 45-3, estimated channel impulse response and estimated noise power. The MMSE filter unit 446 estimates impulse response for each of the outputs from the soft canceller block units 45-1 to 45-3, on the basis of the estimated channel impulse response and the estimated replica error and, determines the MMSE filter coefficients based on the estimated impulse response for each of the soft canceller block units 45-1 to 45-3 and on the estimated noise power. The MMSE filtering combines the outputs from the soft canceller block units 45-1 to 45-3.

The operation of the replica error estimation unit 478 and the MMSE filter unit 446 in the fifth embodiment will now be described.

Based on the incoming replica signal ŝ(t), the replica error estimation unit 478 provides estimated replica error ρ through the calculation of the following equation (18): $ρ = E ⁢ \left[\hat{s}-{\hat{s}}^{2}\right]$
where E[ ] denotes ensemble average. Assuming that the average power of transmitted signal s is unity, estimated replica error p is given by equation (19): $ρ = E ⁢ \left[1-{\hat{s}}^{2}\right]$

The estimated replica error p is supplied, together with the outputs from the soft canceller block units 45-1 to 45-3, the estimated channel impulse response and the estimated noise power, to the MMSE filter unit 446.

Based on the estimated replica error ρ, the MMSE filter unit 446 provides estimated channel impulse response Ĥ'_{i,m} for each of the soft canceller block units 45-1 to 45-3, through equation (20). ${\hat{H}}_{iʹ , m} ⁢ ʹ = DFT ⁢ \left[{h}_{i}^{ʹ}+{\sum }_{iʹ = 1 , iʹ \neq i}^{B}\sqrt{ρ}⋅{h}_{i}^{ʹ}\right]$
where DFT[ ] denotes the time-to-frequency domain conversion of a signal in 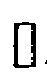 . And h'ᵢ, stands for a delay profile given in equation (21) below, based only on delayed signals processed at the i-th soft canceller block unit 45-i. ${h}_{i}^{ʹ} = h - {h}_{i}$

In the above equation, h stands for estimated channel impulse response inputted to MAP detector unit 423; and hi, a delay profile, based only on delayed signals processed at the i-th soft canceller block unit 45-i, as in the case of the first embodiment.

Based on the estimated channel impulse response Ĥ'_{i,m}, MMSE filter coefficients W_{i,m} are decided through equation (22): ${W}_{i , m} = \frac{{\hat{H}}_{i , m}^{H}}{{\sum }_{iʹ = 1}^{B} {\hat{H}}_{iʹ , m}^{H} ⁢ ʹ ⁢ {\hat{H}}_{iʹ , m} ⁢ ʹ + {\hat{σ}}_{N}^{2}}$

In equation (22), m denotes a natural number; σ̂²N, estimated noise power; B, the number of soft canceller block units 45-1 to 45-3 (in Fig. 18, B=3 is assumed); i and i', a natural number smaller than the number of the units 45-1 to 45-3; Ĥ_{i,m}, a transfer function of the m-th propagation channel in the i-th soft canceller block unit 45-i; Ĥ^{H}_{i,m}, the Hamiltonian of Ĥ_{i,m}; Ĥ_{i',m}, a transfer function of the m-th propagation channel in the i'-th soft canceller block unit 45-i'; and Ĥ^{H}_{i',m}, the Hamiltonian of Ĥ_{i',m}.

In the rf signal receiver of the fifth embodiment described above, the replica signal generating unit 28 generates replica signal ŝ(t) of a transmitted signal from the received signal r(t), while: the soft canceller block units 45-1 to 45-3 remove from received the signal r(t) the delayed signal components at the timing of each predetermined timing pattern; the propagation channel and noise power estimation unit 322 provides estimated noise power σ̂²N; the replica error estimation unit 478 provides an estimated replica error ρ; the MMSE filter unit 446 determines the MMSE filter coefficients W_{i,m} (see eq.(22)) on the basis of estimated channel impulse Ĥ_{i,m} derived from received signal r(t), the estimated noise power σ̂²N, and the estimated replica error ρ; the MMSE filter unit 446 combines, through the use of the filter coefficients W_{i,m}, the delay component-removed signal outputs from the soft canceller block units 45-1 to 45-3; and soft decision output unit 50 performs soft decision on the combined signal output from the MMSE filter unit 446.

Thus, the MMSE filtering can be performed, with the replica error components taken into account.

The MMSE filter coefficients W_{i,m} given by equation (22) above are used in the iterated demodulation, while those used in the first-round demodulation are given by equations (11) and (12), as in the case of the first embodiment.

It is to be noted that the MMSE filtering performed in the fifth embodiment is applicable also to the rf signal receiver of the second to fourth embodiments.

### [Sixth Embodiment]

A description will now be given referring to a sixth embodiment based on MMSE filter 46, in which filter coefficients are decided with the in-block inter-code interference taken into account.

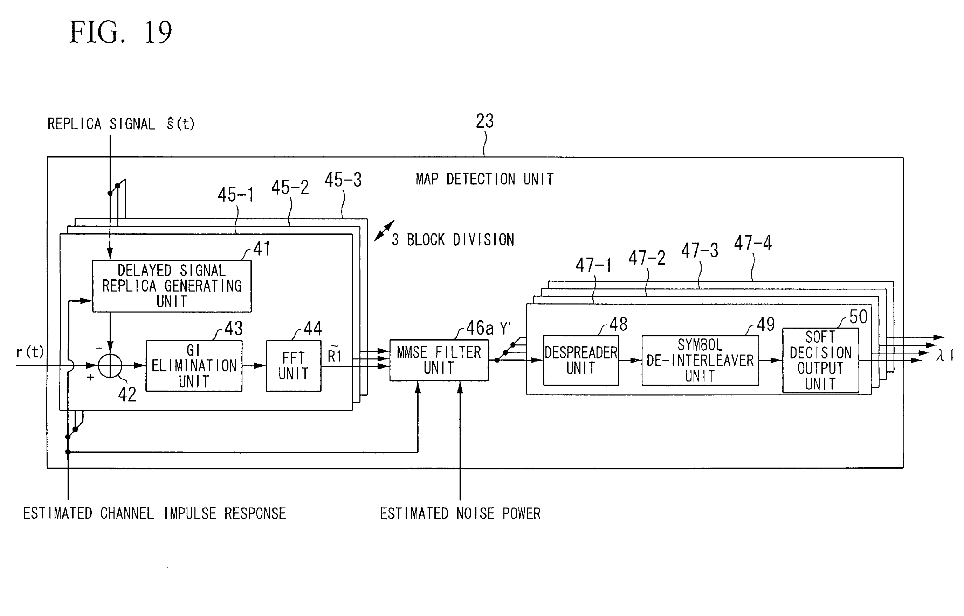

Fig. 19 shows an example of a MAP detection unit 23 according to the sixth embodiment of the invention. The rf signal receiver of this embodiment differs from that of the first embodiment (Fig. 4) only in respect of the MMSE filter unit 46a employed in place of the MMSE filter unit 46. In the sixth embodiment (Fig. 19), structural elements common to the first embodiment are denoted by the same reference numerals with the descriptions thereof omitted.

In the first embodiment, an incoming signal is divided into blocks, whose frequency selectivity is made close to flat, thereby to maintain the code-to-code orthogonality in frequency domain spreading-based MC-CDM, and to reduce the inter-code interference.

When the number of incoming signals increases in terms of the number of the decision of the incoming signal, the frequency selectivity for each block is lowered with the power level still remaining variant. This results in inter-code interference in the respective blocks due to the frequency selectivity.

Therefore, in this embodiment, MMSE filter coefficients W_{i,m} given by equation (23) are used at the MMSE filter unit 46a in the second and the subsequent decoding: ${W}_{i , m} = \frac{{\hat{H}}_{i , m}^{H}}{{\sum }_{iʹ = 1}^{B} {\hat{H}}_{iʹ , m}^{H} ⁢ {\hat{H}}_{iʹ , m} + \left({C}_{mux}-1\right) {\sum }_{iʹ = 1}^{B} {\hat{H}}_{iʹ , m}^{H} ⁢ {\hat{H}}_{iʹ , m} + {\hat{σ}}_{N}^{2}} = \frac{{\hat{H}}_{i , m}^{H}}{{C}_{mux} {\sum }_{iʹ = 1}^{B} {\hat{H}}_{iʹ , m}^{H} ⁢ {\hat{H}}_{iʹ , m} + {\hat{σ}}_{N}^{2}}$
where $\left({C}_{mux}-1\right) {\sum }_{iʹ = 1}^{B} {\hat{H}}_{iʹ , m}^{H} ⁢ {\hat{H}}_{iʹ , m} + {\hat{σ}}_{N}^{2}$
denotes interference from other codes caused in code multiplexing (estimated inter-code interference). In equation (23), m denotes a natural number; Cₘᵤₓ, the number of code multiplexing; σ̂²N, estimated noise power: B, the number of the soft canceller block units 45-1 to 45-3 (in Fig. 19, B=3 is assumed); i and i', the natural number equal or smaller than the number of the soft canceller block units 45-1 to 45-3; Ĥ_{i,m}, a transfer function of the m-th propagation channel in the i-th soft canceller block unit 45-i; Ĥ^{H}_{i,m}, the Hamiltonian of Ĥ_{i,m}; Ĥ_{i',m}, a transfer function of the m-th propagation channel in the i'-th soft canceller block unit 45-i'; and Ĥ^{H}_{i',m}, the Hamiltonian of Ĥ_{i',m}.

In the rf signal receiver of the sixth embodiment, the replica signal generating unit 28 generates replica signal ŝ(t) of a transmitted signal from received signal r(t), while: soft canceller block units 45-1 to 45-3 remove from the received signal r(t), on the basis of the replica signal ŝ(t), delayed components at the timing of a predetermined timing pattern; the propagation channel and noise power estimation unit 22 provides estimated noise power σ̂²N; the MMSE filter unit 446 determines the MMSE filter coefficients W_{i,m} (see equation (23)) on the basis of the estimated channel impulse response Ĥ'_{i,m} derived from the received signal r(t), the estimated noise power σ²N and the estimated inter-code interference obtained on the basis of the number Cₘᵤₓ of code multiplexing; the MMSE filter unit 46a combine, through the use of the MMSE filter coefficients W_{i,m}, the signals from the soft canceller block units 45-1 to 45-3 with the delayed components removed at the timing of a predetermined timing pattern; and soft decision output unit 50 performs soft decision on the combined output from the MMSE unit 46a.

This arrangement takes into account the interference from other codes in the second and the subsequent rounds of demodulation operation.

It should be noted here that the MMSE filter coefficients Wₘ for the first-round demodulation are identical to those used in the first embodiment.

Also, the MMSE filter employed in the sixth embodiment can be used also in the rf signal receiver in the second to fifth embodiments.

Furthermore, the number Cₘᵤₓ of the code multiplexing can be calculated through the estimation based on a control message to the receiver or through an rf signal based estimation.

In the rf signal receiver of the first to sixth embodiments of the invention described above, the use of the FFT reduces the amount of calculation even in the demodulation of multicarrier signals having a large number of subcarriers. Also, even in the removal of inter-code interference in the MC-CDM scheme, the amount of calculation can be kept unaffected by the number of code multiplexing, while keeping the system less vulnerable to delay signal components with a delay exceeding guard interval GI and to inter-code interference.

In the embodiments described above, the symbol synchronization unit 21, the propagation channel and noise power estimation unit 22, the MAP detector unit 23, the code-by-code MAP decoder unit 24-1 to 24-4, the replica generating unit 28, the code-by-code symbol generating units 29-1 to 29-4, the bit interleaver unit 30, the symbol generating unit 31, the symbol interleaver unit 32, the frequency-time spreader unit 33, the DTCH multiplexing unit 34, the PICH multiplexing unit 35, the scrambling unit 36, the IFFT unit 38, the GI insertion unit 38, the P/S conversion unit 39, the bit de-interleaver unit 125, the MAP decoder unit 126, the bit interleaver unit 130, the symbol generating unit 131, the P/S conversion unit 132, the S/P conversion unit 134, the code-by-code symbol interleaver/spreader units 135-1 to 135-4, the replica signal generating unit 228, the symbol interleaver unit 232, and the propagation channel and noise power estimation unit shown in Fig. 3, 13, 14 and 16; the delayed signal replica generating unit 41, the adder unit 42, the GI remover unit 43, the FFT unit 44, the soft canceller block units 45-1 to 45-3, the MMSE filter units 46 and 46a, the code-by-code logarithmic likelihood ratio output units 47-1 to 47-4, the de-multiplexing unit 48, the symbol de-interleaver unit 49, the soft decision unit 50, the MAP detector unit 223, and the symbol interleaver unit 249, the soft decision output unit 250 shown in Figs. 4, 15 and 19; and the MAP decoder 423, the MMSE filter unit 446, the replica error estimation unit 478 shown in Fig. 18 may be entirely or partly replaced with the corresponding computer programs stored in machine readable storage device, from which the programs are read out by a computer system for execution to achieve the desired performance of the rf signal receiver. It is to be noted here that the term computer system as used herein is intended to mean a system including an OS, a peripheral equipment and a hardware.

Also, the term "machine readable storage media" means a flexible disk, optomagnetic disk, ROM, CD-ROM and other transportable media, and a hard disk drive included in a computer system. In addition, the above term is intended to include a communication line, a telephone circuit and the like adapted to temporarily and dynamically carry computer programs; and a volatile memory device included in a computer system serving as a server or a client for storing computer programs for a certain period of time. Furthermore, a program mentioned above may include those replacing functions of hardware and/or those constituting an application program in combination with other programs stored in the storage system of a computer system in advance.

While preferred embodiments of the invention have been described and illustrated above, it should be understood that these are exemplary of the invention and are not to be considered as limiting. Additions, omissions, substitutions and other modifications can be made without departing from the spirit or scope of the invention. Accordingly, the invention is to be considered as being not limited by the foregoing description, and is only limited by the scope of the appended claims.

## Claims

1. An rf signal receiver comprising:
a replica signal generating unit for generating on the basis of a received signal a replica of a transmission signal;
a delayed arriving signal removing unit for removing the delayed arriving signal from the received signal through the use of the replica signal at the timing of a predetermined timing pattern;
a signal combining unit for combining the output of the delayed arriving signal removing unit, whose output represents the results of the removal of the delayed arriving signal from the received signal at the timing of a predetermined timing pattern; and
a demodulation unit for demodulating the output of the signal combining unit.

2. An rf signal receiver as claimed in claim 1, wherein the delayed arriving signal removing unit comprises:
a delayed signal replica generating unit for generating replicas of the delayed arriving signals at the timing of a predetermined timing pattern; and
a signal subtracting unit for subtracting from the received signal the replica of the delayed arriving signal, said replica being generated at the delayed signal replica generating unit at the timing of a predetermined timing pattern.

3. An rf signal receiver as claimed in claim 2, wherein:
the delayed signal replica generating unit is adapted to set the predetermined timing patterns on the basis of the number of arriving rf signals as recognized.

4. An rf signal receiver as claimed in claim 2, wherein:
the delayed signal replica generating unit is adapted to set the predetermined timing pattern on the basis of the timing of the recognized delayed arriving signals.

5. An rf signal receiver as claimed in claim 2, wherein:
the delayed signal replica generating unit is adapted to set the predetermined timing pattern on the basis of the signal power level of the recognized arriving signal.

6. An rf signal receiver as claimed in any one of claims 1 to 5, wherein
a signal decision unit is further provided for error-correcting the demodulation output from the demodulator unit on the basis of the demodulation results, thereby to decide on the signal on a bit-by-bit basis, and wherein
the delayed signal replica generating unit generates a replica signal, which is a replica of the transmitted signal, depending on the output from the signal decision unit.

7. An rf signal receiver as claimed in claim 6, wherein the signal decision unit is adapted to perform error-correction demodulation based on the demodulation output supplied from the demodulator unit, to thereby provide as a decision output the bit-by-bit logarithmic likelihood ratio.

8. An rf signal receiver as claimed in any one of claims 1 to 7, further comprising propagation channel and noise power estimation unit for estimating the noise power level of the propagation channel, wherein the signal combining unit consists of an MMSE filter adapted to determine MMSE filter coefficients on the basis of the estimated channel impulse response and the estimated noise power.

9. An rf signal receiver as claimed in claim 8, wherein the signal combining unit uses the MMSE filter coefficients Wₘ expressed by equation (A) or (B), or MMSE filter coefficients W'_{i,m} expressed by equation (C) (where, m stands for a natural number; Ĥₘ stands for a transfer function for the m-th propagation channel; Ĥ^{H}ₘ stands for the Hamiltonian for Ĥₘ; Cₘᵤₓ stands for a number of code multiplexing σ̂²N stands for an estimated noise power; i stands for a natural number smaller than the number of delayed arriving signal removal units; Ĥ_{i,m} stands for a transfer function for the m-th propagation channel observed in the i-th delayed arriving signal removing unit; and Ĥ^{H}_{i,m} stands for the Hamiltonian of Ĥ_{i,m}): ${W}_{m} = \frac{{\hat{H}}_{m}^{H}}{{\hat{H}}_{m}^{H} ⁢ {\hat{H}}_{m} + ( {C}_{mux} - 1 ) {\hat{H}}_{m}^{H} ⁢ {\hat{H}}_{m} + {\hat{σ}}_{N}^{2}} = \frac{{\hat{H}}_{m}^{H}}{{C}_{mux} ⁢ {\hat{H}}_{m}^{H} ⁢ {\hat{H}}_{m} + {\hat{σ}}_{N}^{2}}$ ${W}_{m} = \frac{{\hat{H}}_{m}^{H}}{{\hat{H}}_{m}^{H} ⁢ {\hat{H}}_{m} + {\hat{σ}}_{N}^{2}}$ ${W}_{i , m} = \frac{{\hat{H}}_{i , m}^{H}}{{\sum }_{iʹ = 1}^{B} {\hat{H}}_{iʹ , m}^{H} ⁢ {\hat{H}}_{iʹ , m} + {\hat{σ}}_{N}^{2}}$

10. An rf signal receiver as claimed in claims 8 or 9, wherein the propagation channel and noise power estimation unit comprises:
a received signal replica generating unit for generating a replica of the received signal on the basis of the replica signal supplied from the replica signal generating unit and the estimated channel impulse response; and
a noise power estimation unit for estimating the noise power by calculating the difference between the output of the reception signal replica generating unit and the received signal.

11. An rf signal receiver comprising:
a replica signal generating unit for generating as a replica of a transmitted signal a replica signal on the basis of a received signal;
a delayed arriving signal removing unit for removing from the received signal the delayed arriving signal at the timing of a predetermined timing pattern through the use of the replica signal;
a propagation channel and noise power estimation unit for estimating the noise power;
a replica error estimation unit for estimating the replica error on the basis of the replica signal;
a signal combining unit for determining the filter coefficients on the basis of the estimated channel impulse response based on the received signal, the estimated noise power and the estimated replica error, and for combining, through the use of the determined filter coefficients, the output of the delayed arriving signal removing unit with the delayed arriving signal removed at the timing of a predetermined timing pattern; and
a demodulator unit for demodulating the output of the signal combining unit.

12. An rf signal receiver as claimed in claim 11, wherein the signal combining unit is adapted to estimate a channel impulse response at the timing of a predetermined timing pattern, on the basis of the estimated replica error.

13. An rf signal receiver as claimed in claims 11 or 12, wherein the signal combining unit uses filter coefficients W_{i,m} expressed by equation (D) (where m stands for a natural number; δ̂²N stands for an estimated noise power; B stands for the number of arriving signal removing sections; i and i' stand for natural numbers smaller than the number of the delayed arriving signal elimination sections; Ĥ_{i,m} stands for a transfer function of the m-th propagation channel observed at the i-th delayed arriving signal removing unit; Ĥ^{H}_{i,m} stands for the Hamiltonian for Ĥ_{i,m}; Ĥ_{i',m}; stands for a transfer function of the m-th propagation channel observed at the i'-th delayed arriving signal removing section with the uncertainty-based error of the replica signals taken into account; and Ĥ^{H}_{i',m} stands for the Hamiltonian of Ĥ'_{i',m}): ${W}_{i , m} = \frac{{\hat{H}}_{i , m}^{H}}{{C}_{mux} {\sum }_{iʹ = 1}^{B} {\hat{H}}_{iʹ , m}^{H} ⁢ ʹ ⁢ {\hat{H}}_{iʹ , m} ⁢ ʹ + {\hat{σ}}_{N}^{2}}$

14. An rf signal receiver as claimed in any one of claims 11 to 13, wherein the signal combining unit calculates Ĥ'_{i',m} through the use of equation (E) (where DFT [ ] stands for the time domain-to-frequency domain transform of a signal in [ ]; h'ᵢ and h"ᵢ stand for delay profile of only the arriving signals to be processed at the i-th and i'-th delayed arriving signal removing units; and ρ stands for an estimated replica error): ${\hat{H}}_{iʹ , m} ⁢ ʹ = DFT ⁢ \left[{h}_{i}^{ʹ}+{\sum }_{iʹ = 1 , iʹ \neq i}^{B}\sqrt{ρ}⋅{h}_{i}^{ʹ}\right]$

15. An rf signal receiver comprising:
a replica signal generating unit for generating a replica signal representative of a replica of a transmitted signal;
a delayed arriving signal removing unit for removing from the received signal delayed arriving signal at the timing of a predetermined timing pattern;
a propagation channel and noise power estimation unit for estimating noise power;
a signal combining unit for determining filter coefficients on the basis of the estimated channel impulse response, the estimated noise power and the inter-code interference estimated through the number of code multiplexing, and for combining through the use of the determined filter coefficients, the signals from the delayed arriving signal removing unit which have the delayed arriving signal removed at the timing of a predetermined timing pattern; and
a demodulation unit for demodulating the output from the signal combining unit.

16. An rf signal receiver as claimed in claim 15, wherein the signal combining unit uses filter coefficients W_{i,m} expressed by equation (F) (where m stands for a natural number; Cₘᵤₓ stands for the number of code multiplexing; σ²N stands for an estimated noise power; B stands for the number of delayed arriving signal removing units; i and i', stand for natural numbers smaller than the number of delayed arriving signal removing units; H_{i,m} stands for a transfer function for the m-th propagation channel at the i-th delayed arriving signal removing unit; Ĥ^{H}_{i,m} stands for the Hamiltonian of Ĥ_{i,m}; Ĥ_{i',m} stands for a transfer function for the m-th propagation channel observed at the i'-th delayed arriving signal removing unit; and Ĥ^{H}_{i',m} stands for the Hamiltonian of Ĥ_{i',m}): ${W}_{i , m} = \frac{{\hat{H}}_{i , m}^{H}}{{C}_{mux} {\sum }_{iʹ = 1}^{B} {\hat{H}}_{iʹ , m}^{H} ⁢ {\hat{H}}_{iʹ , m} + {\hat{σ}}_{N}^{2}}$

17. An rf signal receiver as claimed in any one of claims 11 to 16, wherein the signal combining unit comprises a minimum mean square error filter adapted to use minimum mean square error filter coefficients as the above-mentioned filter coefficients.

18. A method of receiving rf signals comprising the steps of
generating a replica signal on the basis of a received signal, said replica signal being representative of a replica of a transmitted signal;
removing the delayed arriving signals from the received signal at the timing of a predetermined timing pattern through the use of said replica signal;
combining the output signal from the delayed arriving signal removing step with the arriving signal removed at the timing of a predetermined timing pattern; and
demodulating the output of the signal combining step.

19. A method of receiving rf signals comprising the steps of
generating a replica signal on the basis of the received signal, said replica signal being representative of a replica of a transmitted signal;
removing the delayed arriving signals from the received signal at the timing of a predetermined timing pattern through the use of said replica signal;
estimating propagation channel and noise power;
estimating replica error from said replica signal;
determining the filter coefficients on the basis of estimated channel impulse response calculated from the received signal, the estimated noise power and the estimated replica error, and combining through the use of the filter coefficients the delayed arriving signal-removed output signal from the arriving signal removing step; and
demodulating the combined output from the combining step.

20. A method of receiving rf signals comprising the steps of:
generating a replica signal on the basis of the received signal, said replica signal being representative of a replica of a transmitted signal;
removing the delayed arriving signals from the received signal at the timing of a predetermined timing pattern through the use of the replica signal;
estimating propagation channel and noise power;
determining filter coefficients on the basis of estimated channel impulse response calculated from the reception signal, the estimated noise power and the estimated inter-code interference dependent on the number of code multiplexing, and combining the output signal from the delayed arriving signal removing step with the delayed arriving signal removed at the timing of a predetermined timing pattern; and
demodulating the output of the signal combining step.
